(19) **Europäisches Patentamt**
**European Patent Office**
**Office européen des brevets**

(11) **EP 3 192 681 A1**

(12) **EUROPEAN PATENT APPLICATION**
published in accordance with Art. 153(4) EPC

(43) Date of publication:
**19.07.2017 Bulletin 2017/29**

(21) Application number: **15839857.8**

(22) Date of filing: **31.08.2015**

(51) Int Cl.:
***B60G 17/018*** (2006.01)

(86) International application number:
**PCT/JP2015/074612**

(87) International publication number:
**WO 2016/039194 (17.03.2016 Gazette 2016/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **08.09.2014 JP 2014182045**

(71) Applicant: **KYB Corporation**
**Tokyo 105-6111 (JP)**

(72) Inventors:
• **KUBOTA, Tomoo**
**Tokyo 105-6111 (JP)**
• **OKUMURA, Masatoshi**
**Tokyo 105-6111 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **SIGNAL LEVEL DETECTION DEVICE AND SIGNAL LEVEL DETECTION METHOD**

(57) A signal level detection device 1 and a signal level detection method according to a means for solving a problem of the present invention varies a cut-off frequency ωc of a variable low-pass filter 3 which filters a signal level r. The cut-off frequency ωc is varied based on the signal level r or information referred to for estimating the signal level. The signal level detection device 1 and the signal level detection method therefore reduce a delay of a rise of the obtained signal level r from an actual signal level, and sufficiently remove noise superimposed on the signal level r even when the signal level r is extremely low. Accordingly, control performance improves regardless of a degree of the signal level r.

*FIG. 12*

**EP 3 192 681 A1**

**Description**

Technical Field

The present invention relates to a signal level detection device and a signal level detection method.

Background Art

A device disclosed in JP 2011-225040 A is a device for obtaining a signal level indicating a magnitude of a signal, and is included in a control device for controlling a damper mounted on a vehicle. This device for obtaining a signal level acquires an unsprung speed, and a signal generated by filtering the unsprung speed. This signal has a phase different from the phase of the unsprung speed by 90 degrees. Subsequently, the device squares each of the unsprung speed and the obtained signal, and calculates a square root of the sum of the squared unsprung speed and the squared signal to produce a sequential envelope waveform.

The envelope waveform obtained by processing a signal in this manner corresponds to a signal level indicating a magnitude of a signal. In case of control of damping force of the damper, a signal level obtained by processing a signal in this manner corresponds to a magnitude of vibration of a sprung member as described above. Accordingly, the signal level thus obtained is useful information effective for vibration reduction.

Citation List

Patent Literature

Patent Literature 1: JP 2011-225040 A

Summary of the Invention

The device described above for obtaining a signal level prevents generation of a ripple superimposed on a signal level by using a low-pass filter which filters a signal of a signal level to smooth the signal after the signal level is generated.

According to the signal level filtered by the low-pass filter, however, a rise of the obtained signal level may be delayed from a rise of an actual signal level. When the signal thus delayed is used for control required to be highly responsive, preferable control results may be difficult to obtain due to delayed control.

Moreover, when a signal level is extremely low, a proportion of noise superimposed on the obtained signal level increases. In other words, a signal-to-noise ratio (S/N ratio) decreases. In this case, reliability of the obtained signal level lowers, wherefore control performance deteriorates. One of solutions to this problem may be lowering of a cut-off frequency set for the low-pass filter. In this case, however, a delay of the obtained signal level from the actual signal level increases. This condition produces such a contradiction that control performance remarkably deteriorates when the signal level is high.

The present invention has been developed to solve the aforementioned problems. An object of the present invention is to provide a signal level detection device capable of improving control performance regardless of a degree of a signal level.

For achieving the above object, a signal level detection device and a signal level detection method according to the present invention vary a cut-off frequency of a variable low-pass filter which filters a signal level. The cut-off frequency is varied based on the signal level or information referred to for estimating the signal level. The signal level detection device and the method therefor reduce a delay of a rise of the signal level obtained for an actual signal level, and sufficiently remove noise superimposed on the signal level even when the signal level is extremely low.

Brief Description of Drawings

Fig. 1 is a configuration diagram of a signal level detection device according to a first embodiment.
Fig. 2 is a view illustrating the signal level detection device applied to a vehicle.
Fig. 3 is a view illustrating waveforms of level calculation signals.
Fig. 4 is a view showing frequency phase characteristics of the level calculation signals.
Fig. 5 is a view illustrating waveforms of absolute values of the level calculation signals.
Fig. 6 is a view illustrating waveforms of the absolute values of the level calculation signals for input of an original signal at a different frequency.

Fig. 7 is a configuration diagram of a signal level detection device according to a modified example of the first embodiment.

Fig. 8 is a view showing an example of frequency phase characteristics of level calculation signals for obtaining preferable signal levels for an original signal ranging from 0.1 Hz to 20 Hz.

Fig. 9 is a configuration diagram of a signal level calculation unit according to a modified example.

Fig. 10 is a view illustrating a synthetic vector of an original signal and an integrated value (differential value).

Fig. 11 is a view illustrating loci of the original signal and the integrated value and loci of the original signal and the differential value.

Fig. 12 is a map showing a relationship between a vibration level and a cut-off frequency.

Fig. 13 is a flowchart showing processing procedures performed by the signal level detection device according to the first embodiment.

Fig. 14 is a graph showing a waveform of a vibration level output from the signal level detection device according to the first embodiment.

Fig. 15 is a configuration diagram of a signal level detection device according to a second embodiment.

Fig. 16 is a flowchart showing processing procedures performed by the signal level detection device according to the second embodiment.

Fig. 17 is a graph showing a waveform of a vibration level output from the signal level detection device according to the second embodiment.

Fig. 18 is a configuration diagram of a signal level detection device according to a modified example of the second embodiment.

Fig. 19 is a configuration diagram of a signal level detection device according to a third embodiment.

Fig. 20 is a flowchart showing processing procedures performed by the signal level detection device according to the third embodiment.

Fig. 21 is a configuration diagram of a signal level detection device according to a fourth embodiment.

Fig. 22 is a flowchart showing processing procedures performed by the signal level detection device according to the fourth embodiment.

Fig. 23 is a graph showing a waveform of a vibration level output from the signal level detection device according to the fourth embodiment.

Fig. 24 is a configuration diagram of a signal level detection device according to a fifth embodiment.

Fig. 25 is an example of a configuration diagram of a largest value extraction unit included in the signal level detection device according to the fifth embodiment.

Fig. 26 illustrates an example of a smoothing signal generated by the largest value extraction unit included in the signal level detection device according to the fifth embodiment.

Fig. 27 is a flowchart showing an example of procedures for generating the smoothing signal by the largest value extraction unit according to the fifth embodiment.

Fig. 28 is a flowchart showing an example of processing procedures performed by the largest value extraction unit according to the fifth embodiment.

Fig. 29 is a view illustrating a first configuration example of a smoothing unit included in the largest value extraction unit according to the fifth embodiment.

Fig. 30 is a view illustrating a smoothing signal which connects an original signal and a vibration level.

Fig. 31 is a view illustrating a second configuration example of the smoothing unit included in the largest value extraction unit according to the fifth embodiment.

Fig. 32 is a map used for determining a relationship between a deviation and an addition value.

Fig. 33 is a map used for determining a relationship between an addition value gain and a selected signal.

Fig. 34 is a view illustrating a third configuration example of the smoothing unit.

Fig. 35 is a graph showing a waveform of a vibration level output from the signal level detection device according to the fifth embodiment.

Fig. 36 is a configuration diagram of a signal level detection device according to a sixth embodiment.

Fig. 37 is a graph showing a waveform of a vibration level output from the signal level detection device according to the sixth embodiment.

Fig. 38 is a flowchart showing processing procedures performed by the signal level detection device according to the sixth embodiment.

Description of Embodiments

<First Embodiment>

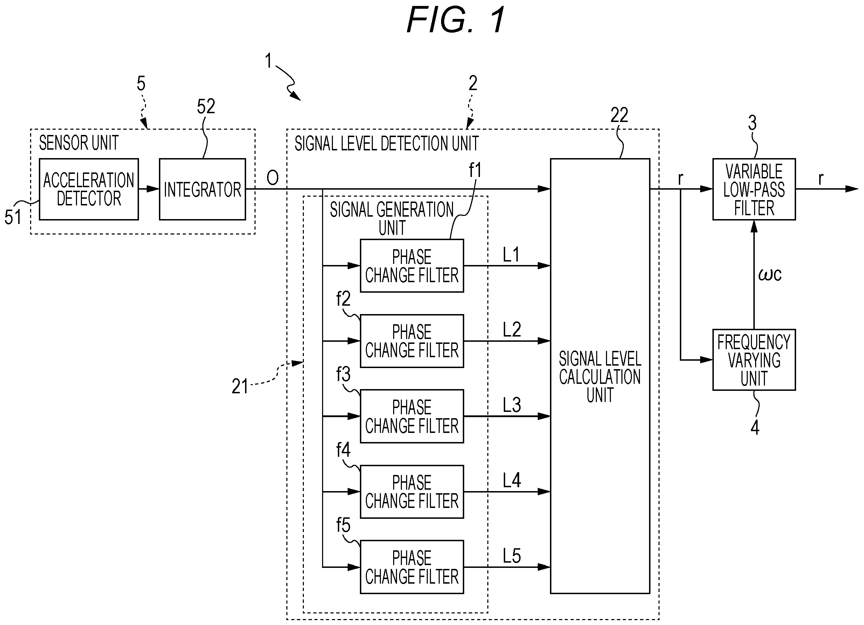

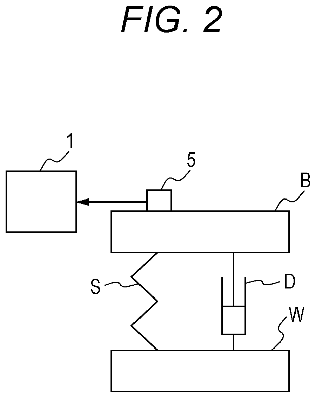

Embodiments according to the present invention are hereinafter described with reference to the drawings to detail the present invention. As illustrated in Figs. 1 and 2, a signal level detection device 1 according to a first embodiment is included in a vehicle, and configured to detect a vibration level r indicating a magnitude of vibration of a sprung member B of the vehicle. The vibration level r is a signal level of a signal corresponding to a sprung speed, i.e., a speed of the sprung member B in an up-down direction as a type of vibration information about the sprung member B of the vehicle. Accordingly, the signal level detection device 1 includes a signal level detection unit 2 which obtains the vibration level r of the sprung member B as a signal level, a variable low-pass filter 3 which filters the vibration level r detected by the signal level detection unit 2, and a frequency varying unit 4 which varies a cut-off frequency $\omega c$ of the variable low-pass filter 3.

Respective units are hereinafter detailed. According to this embodiment described herein, the signal level detection device 1 detects the vibration level r of the sprung member B as a signal level of this embodiment based on an original signal O corresponding to a signal output from a sensor unit 5. This signal output from the sensor unit 5 is vibration information sensed by the sensor unit 5 as information indicating vibration of the sprung member B elastically supported from below in the figure by a suspension spring S provided between the sprung member B and an unsprung member W of the vehicle as illustrated in Fig. 2.

According to this embodiment, the signal level detection unit 2 receives, as the original signal O, a signal output from the sensor unit 5 attached to the sprung member B to receive a sprung speed, and obtains the vibration level r by using the original signal O.

The signal level detection unit 2 includes a signal generation unit 21 which generates two or more calculation signals in different phases, i.e., five level calculation signals L1 through L5 in this embodiment, by utilizing the input original signal O, and a signal level calculation unit 22 which obtains the signal level r based on the original signal O and the respective level calculation signals L1 through L5.

The sensor unit 5 is attached to the sprung member B, and configured to detect a speed of the sprung member B in the up-down direction. For detecting a signal level of a signal corresponding to vibration information on the sprung member B in a front-rear direction or a left-right direction, a speed of the sprung member B in the front-rear direction or the left-right direction is detected by using the sensor unit 5. The sensor unit 5 may be an arbitrary type of sensor unit as long as a speed in the same direction as the direction of vibration of the sprung member B is detectable by the sensor unit. For detecting a signal level of a signal obtained by sensing vibration of the sprung member B in the up-down direction and the left-right direction, for example, the sensor unit 5 detects speeds of the sprung member B in the up-down direction and the left-right direction to obtain speeds of the sprung member B both in the up-down and left-right directions.

Note that the signal level detection device 1 detects a signal level by processing a signal obtained by the sensor unit 5. Accordingly, the signal level detection device 1 obtains not only a vibration level based on a signal generated by sensing vibration of the sprung member B, but also a signal level based on a signal generated by sensing pressure fluctuations inside a vessel, changes of air pressure, radio waves and the like, and a signal level obtained by processing a control signal generated within a control device.

The sensor unit 5 includes an acceleration detector 51 attached to the sprung member B to detect an up-down acceleration corresponding to an acceleration of the sprung member B in the up-down direction, and an integrator 52 which integrates respective up-down accelerations detected by the acceleration detector 51 to obtain a sprung speed of the sprung member B. The sensor unit 5 outputs the detected sprung speed of the sprung member B as the original signal O.

Subsequently, the signal generation unit 21 obtains the five level calculation signals L1 through L5 each of which has the same amplitude as the amplitude of the original signal O, but has a phase different from each other. More specifically, the signal generation unit 21 includes phase change filters f1 through f5 each of which does not change the amplitude of the original signal O, but only changes the phase of the original signal O to obtain the level calculation signal Ln (n = 1, 2, 3, 4, 5) from the original signal O. The signal generation unit 21 operates the phase change filters f1 through f5 in parallel to filter the original signal O by using the phase change filters f1 through f5. The number of the phase change filters is determined in correspondence with the number of the level calculation signals L1 through L5, i.e., five in this embodiment.

A transmission function G(s) of each of the phase change filters f1 through f5 is determined by using following Equation (1). In Equation (1), O(s) represents a Laplace transform amount of the original signal O, Ln(s) (n = 1, 2, 3, 4, 5) represents a Laplace transform amount of the level calculation signal Ln (n = 1, 2, 3, 4, 5), s represents a Laplace operator, and $\omega n$ (n = 1, 2, 3, 4, 5) represents a frequency. The frequencies $\omega 1$ through $\omega 5$ are different from each other.
[Equation 1]

$$G(s) = \frac{Ln(s)}{O(s)} = \frac{-s + \omega_n}{s + \omega_n} \quad \cdots \cdots (1)$$

Accordingly, for obtaining the level calculation signal Ln (n = 1, 2, 3, 4, 5), the signal generation unit 21 calculates the level calculation signal Ln (n = 1, 2, 3, 4, 5) from the original signal O by using the phase change filter fn (n = 1, 2, 3, 4, 5) which has the transmission function G(s) set at the frequency $\omega$n (n = 1, 2, 3, 4, 5). For obtaining the level calculation signal L4, for example, the signal generation unit 3 filters the original signal O by using the phase change filter f4 having the transmission function G(s) set at the input frequency $\omega$4 to calculate the level calculation signal L4 from the original signal O.

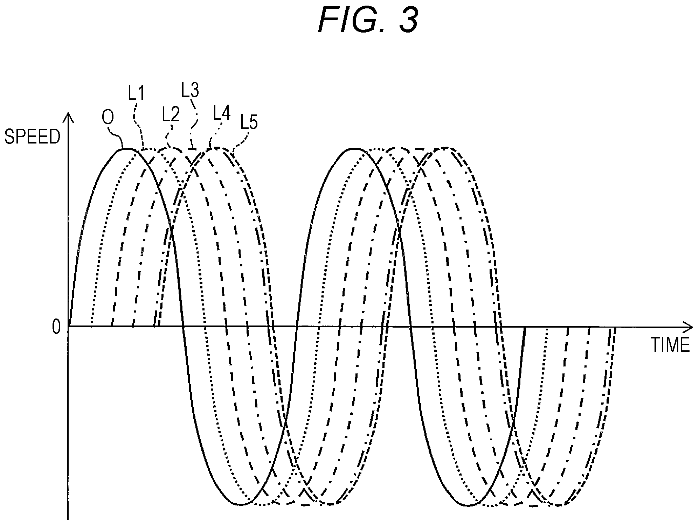

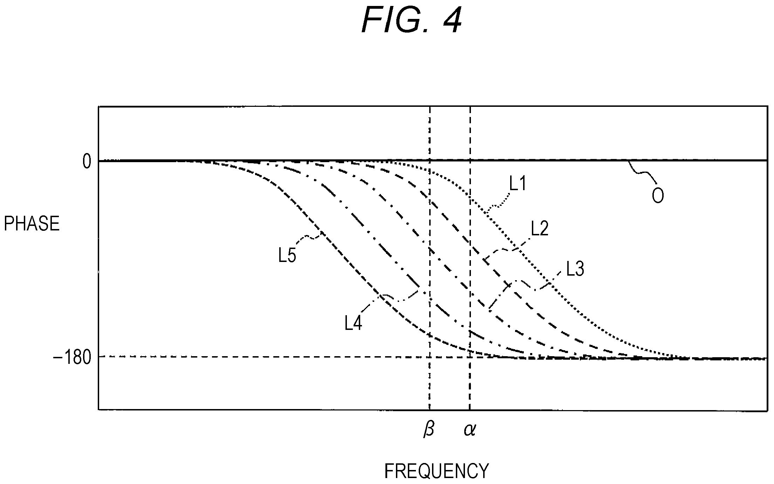

Accordingly, the signal generation unit 21 easily obtains the level calculation signals L1 through L5 by using the phase change filters f1 through f5, each of which has the same amplitude as the amplitude of the original signal O, but is different from each other only in phase for input of the original signal O at a certain frequency $\alpha$ as illustrated in Fig. 3. A phase difference between the original signal O and the level calculation signal L1, and phase differences between the respective level calculation signals L1 through L4 are equalized. However, a phase difference between the level calculation signal L4 and the level calculation signal L5 is different from the phase difference between the original signal O and the level calculation signal L1, and each phase difference between the other level calculation signals L1 through L5. This condition is produced for the following reason. Fig. 4 illustrates frequency phase characteristics of the level calculation signals L1 through L4. As can be seen from the figure, the frequency phase characteristics are changeable in a range between a maximum of 0 degrees and a minimum of -180 degrees, and therefore are limited between 0 degrees and -180 degrees. When the frequency of the original signal is extremely low, the phases of the level calculation signals L1 through L5 lie at 0 degrees or around 0 degrees. When the frequency of the original signal is extremely high, the phases of the level calculation signals L1 through L5 lie at -180 degrees or around -180 degrees. In this case, phase differences of the level calculation signals L1 through L4 obtained by filtering the original signal O at the frequency $\alpha$ are disposed at equal intervals as illustrated in Fig. 3. However, the phase of the level calculation signal L5 is located close to -180 degrees, wherefore the phase difference between the level calculation signal L5 and the adjoining level calculation signal L4 becomes small.

Alternatively, the transmission function G(s) of the phase change filters f1 through f5 may be set by following Equation (2). In Equation (2), O(s) represents a Laplace transform amount of the original signal O, Ln(s) (n = 1, 2, 3, 4, 5) represents a Laplace transform amount of the level calculation signal Ln (n = 1, 2, 3, 4, 5), s represents a Laplace operator, and $\omega$n (n = 1, 2, 3, 4, 5) represents a frequency different for each of $\omega$1 through $\omega$5.
[Equation 2]

$$G(s) = \frac{Ln(s)}{O(s)} = \frac{s - \omega_n}{s + \omega_n} \quad \cdots \cdots (2)$$

In addition, each of the phase change filters f1 through f5 may be a secondary low-pass filter. More specifically, the transmission function G(s) of the phase change filters f1 through f5 may be set by following Equation (3). In Equation (3), O(s) represents a Laplace transform amount of the original signal O, Ln (s) (n = 1, 2, 3, 4, 5) represents a Laplace transform amount of the level calculation signal Ln (n = 1, 2, 3, 4, 5), s represents a Laplace operator, $\zeta$ represents a damping factor, and $\omega$n (n = 1, 2, 3, 4, 5) represents a cut-off frequency different for each of $\omega$1 through $\omega$5.
[Equation 3]

$$G(s) = \frac{Ln(s)}{O(s)} = \frac{\omega_n^2}{s^2 + 2\zeta\omega_n s + \omega_n^2} \quad \cdots \cdots (3)$$

When each of the phase change filters f1 through f5 is constituted by a low-pass filter, the phases of the level calculation signals L1 through L5 may be delayed from the original signal O. When each of the phase change filters f1 through f5 is constituted by a high-pass filter, the phases of the level calculation signals L1 through L5 may be advanced from the original signal O. Accordingly, adoptable is such a configuration which constitutes a part of the phase change filters f1 through f5 by high-pass filters, and constitutes the remaining part of the phase change filters f1 through f5 by low-pass filters.

Moreover, the signal generation unit 21, which is configured to obtain the level calculation signals L1 through L5 having different phases from the original signal O, may generate signals delayed from the original signal O by a specific time for each as the level calculation signals L1 through L5 without utilizing the foregoing filtering.

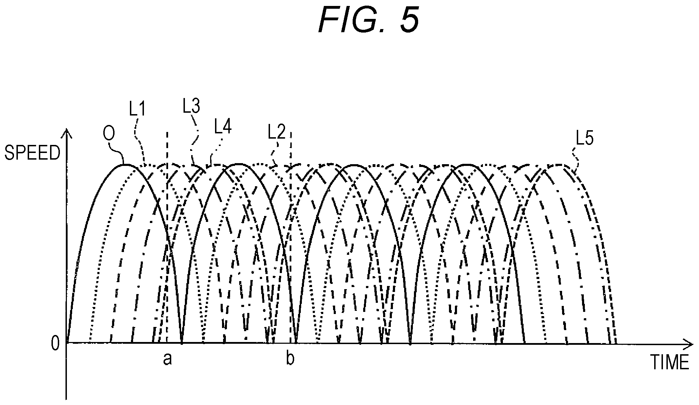

The signal level calculation unit 22 obtains the signal having a largest value of the original signal O and the respective level calculation signals L1 through L5 after conversion into absolute values. When the original signal O and the respective level calculation signals L1 through L5 are converted into absolute values, negative portions of waveforms of the original signal O and the respective level calculation signals L1 through L5 are folded to the positive side with respect to a time axis after conversion into absolute values as illustrated in Fig. 5. The respective absolute values of the original signal O and the level calculation signals L1 through L5 have different phases, wherefore the respective waveforms of the original signal O and the level calculation signals L1 through L5 produce time lags even after conversion into absolute values.

After this process, the largest value of the original signal O and the level calculation signals L1 through L5 at any time after conversion into absolute values becomes equivalent to or close to a maximum amplitude of the original signal O in Fig. 5. For example, the largest value of the original signal O and the level calculation signals L1 through L5 at a time a after conversion into absolute values corresponds to the maximum of the level calculation signal L2, while the largest value of the original signal O and the level calculation signals L1 through L5 at a time b after conversion into absolute values corresponds to an approximation of a maximum amplitude of the original signal O.

Maximum amplitudes of the level calculation signals L1 through L5 are equivalent to a maximum amplitude of a sprung speed of the original signal O. The maximum amplitude of the original signal O is equivalent to the vibration level r, and indicates a magnitude of vibration of the sprung member B based on a scale of speed according to this embodiment. More specifically, the maximum in one cycle of the original signal O becomes the vibration level r corresponding to a signal level according to this embodiment. However, the vibration level r is difficult to timely obtain only by sampling for one cycle. Moreover, when the frequency of vibration of the sprung member B varies, a time required for one cycle of the original signal varies in accordance with a change of the frequency of the original signal. Accordingly, the maximum amplitude is difficult to obtain. On the other hand, generated in this embodiment are the level calculation signals L1 through L5 having the same amplitude as the amplitude of the original signal O and different from each other only in phase as described above. In this case, one of the original signal O and the level calculation signals L1 through L5 after conversion into absolute values is expected to have the largest value or a value close to the largest value at the time of calculating the vibration level r. Accordingly, the vibration level r indicates the maximum amplitude of the original signal O, or an approximation of this maximum amplitude when the vibration level r is set to the largest value of the original signal O and the level calculation signals L1 through L5 after conversion into absolute values.

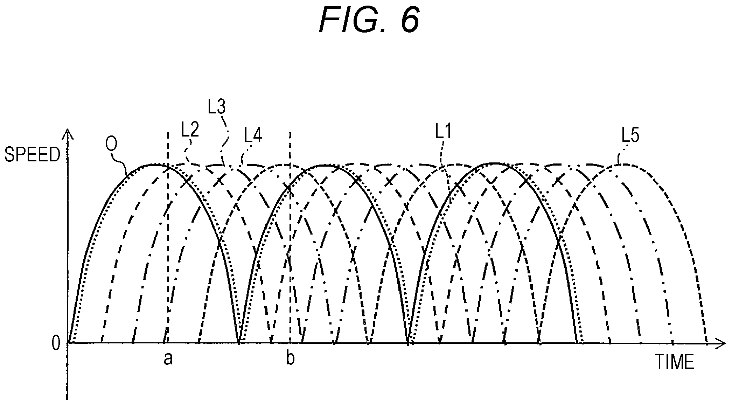

As described above, the vibration level r is set to the largest value of the original signal O or the level calculation signals L1 through L5 having phases different from the phase of the original signal O at the time of calculation. In this case, the vibration level r indicates the maximum amplitude of the original signal O or an approximate value of this maximum amplitude even when the original signal O at a frequency β lower than the frequency α is input as illustrated in Fig. 6. In other words, an approximate value of the maximum amplitude of the original signal O is obtained as the vibration level r even when the frequency of the original signal O is varied.

While the phase differences between the level calculation signals L1 through L5 are equalized in Fig. 6, the phase difference between the original signal O and the level calculation signal L1 is different from the other phase differences between the level calculation signals L1 through L5. The phase of the original signal O is fixed at 0 degrees as illustrated in Fig. 4. On the other hand, the phase of the level calculation signal L1 is limited to the maximum of 0 degrees at a lower frequency. In this case, the phase of the level calculation signal L1 comes close to 0 degrees to decrease the phase difference between the level calculation signal L1 and the original signal O. Moreover, in a low frequency range, the phase difference between the level calculation signal L1 and the adjoining level calculation signal L2 also decreases. However, in the low frequency range, the signal level r corresponding to an approximate value of the maximum amplitude of the original signal O is obtained based on the level calculation signals L2 through L5 having equivalent phase differences. The signal level detection device 1 therefore obtains the maximum amplitude of the original signal O or an approximate value of this maximum amplitude as the signal level r timely and in real time even when the frequency of the original signal O is varied. Accordingly, the signal level detection device 1 obtains the accurate signal level r for signals in a wide frequency band.

As described above, the signal level detection unit 2 is capable of obtaining a signal level timely and in real time even when the frequency of the original signal O is varied. Accordingly, signal level detection suitable for control in a wide frequency band is achievable. When the signal level detection device 1 is included in a vehicle to detect a signal level corresponding to a vibration level of a sprung member of the vehicle, the vibration level r of the sprung member B is accurately detectable regardless of a frequency of vibration input to the sprung member B in a wide frequency range from 0.1 Hz to 20 Hz, such as sprung resonant frequency of vibration from 1 Hz to 2 Hz, unsprung resonant frequency of vibration from 10 Hz to 20 Hz, and vibration around 0.1 Hz at the time of steering. Examples of vibration information on the sprung member B include information on displacement and acceleration of the sprung member B as well as a sprung speed. In this case, a magnitude of displacement or acceleration may be obtained as a vibration level.

According to this embodiment, the vibration level r is obtained based on the original signal O indicating a sprung speed as vibration information on the spring member B. Accordingly, a magnitude of vibration (vibration level) of the sprung member B is detectable timely and in real time based on the vibration level r detected in this manner. The vibration level r obtained in this manner is calculated by direct input of the not-delayed original signal O into the signal level calculation unit 22. In this case, the obtained vibration level r is not delayed from a sharp change or rise of the vibration level r.

Accordingly, instead of vibration of a sprung member, a vibration level of an unsprung member W of the vehicle may be obtained based on vibration information such as displacement and acceleration of the unsprung member W, as a vibration level corresponding to a signal level based on a signal indicating vibration information. In addition, the configuration of this embodiment is also suitable for detection of a vibration level of a steering wheel whose vibration frequency in a rotational direction greatly varies in each of operation situations of a driver. In this case, any one of a rotation angle, an angular speed, and an angular acceleration of the steering wheel may be detected based on a signal indicating vibration information on the steering wheel, whereafter a vibration level of rotation of the steering wheel may be obtained based on a scale of any one of the rotation angle, the angular speed, and the angular acceleration. Accordingly, the single unit of the signal level detection device 1 is capable of obtaining vibration levels of devices vibrating on a vehicle which receives vibration in a wide frequency band. It is therefore understood that the signal level detection device 1 is an optimum device for a vehicle. Alternatively, a plurality of types of vibration information may be selected as signals and processed by the single signal level detection device 1 to obtain vibration levels of the respective types of information.

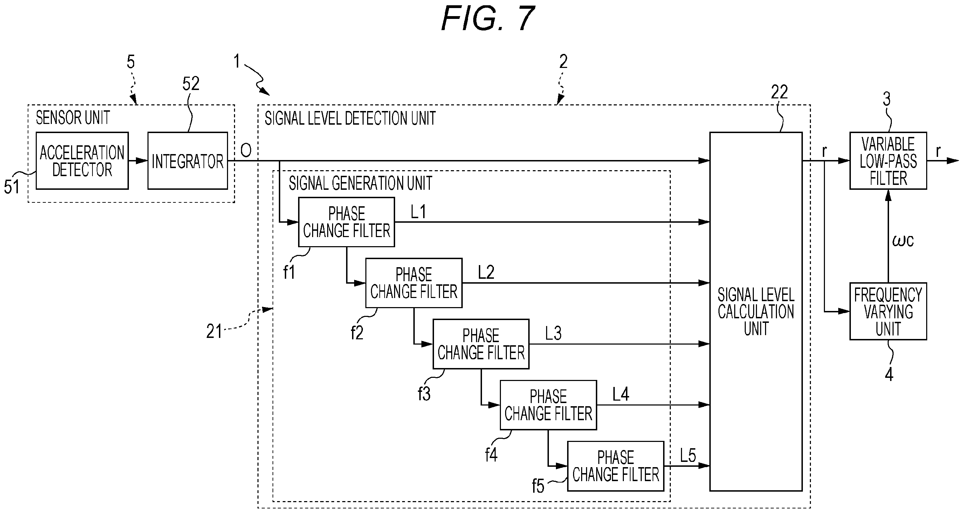

Furthermore, the phase change filters f1 through f5 are configured to process the original signal O in parallel and obtain the level calculation signals L1 through L5. However, the phase change filters f1 through f5 may be disposed in series as illustrated in Fig. 7. For example, the original signal O may be processed by the phase change filter f1 to obtain the level calculation signal L1, whereafter the level calculation signal L1 may be processed by the phase change filter f2 to obtain the level calculation signal L2. As in this manner, the level calculation signal processed by the corresponding phase change filter of the phase change filters f2 through f5 may be subsequently processed by the phase change filter located immediately after the previous phase change filter to obtain the level calculation signals.

As described above, frequency phase characteristics of the level calculation signals vary in the range from the maximum of 0 degrees to the minimum of -180 degrees as illustrated in Fig. 4. In this case, the frequency phase characteristics approach 0 degrees at a lower frequency, and approach -180 degrees at a higher frequency. The phases of the original signal O and the level calculation signals L1 through L4 processed by the phase change filters f1 through f5 are equalized at the high frequency $\alpha$, and the signal level r corresponding to the maximum amplitude of the original signal O or an approximate value of this maximum amplitude is obtained. On the other hand, the phases of the level calculation signals L1 through L5 processed by the phase change filters f1 through f5 are equalized at the low frequency $\beta$, and the signal level r corresponding to the maximum amplitude of the original signal O or an approximate value of this maximum amplitude is obtained.

Accordingly, the signal level detection device 1 of this embodiment is capable of detecting the accurate signal level r for the original signal O at a frequency ranging from the high frequency $\alpha$ to the low frequency $\beta$. Based on the above description, the original signal O and the level calculation signals L1 through L4 generated by the phase change filters f1 through f4 contribute to detection of the vibration level r for the original signal O at the frequency $\alpha$, while the phase change filters f1 through f5 contribute to detection of the vibration level r for the original signal O at the frequency $\beta$. It is therefore understood that the phase change filters contributing to detection of the vibration level r changes in accordance with the frequency of the original signal O.

Accordingly, for widening the frequency band allowing accurate detection of the vibration level r, the original signal O and at least two level calculation signals are dispersed within 180 degrees with equalized phase differences in a range from a minimum to a maximum of the frequency band when the original signal O is used together with the level calculation signals. On the other hand, at least three level calculation signals are dispersed within 180 degrees with equalized phase differences when only the level calculation signals are used for obtaining a signal level. The number of filters provided for generating level calculation signals is therefore determined in accordance with the number of generated level calculation signals.

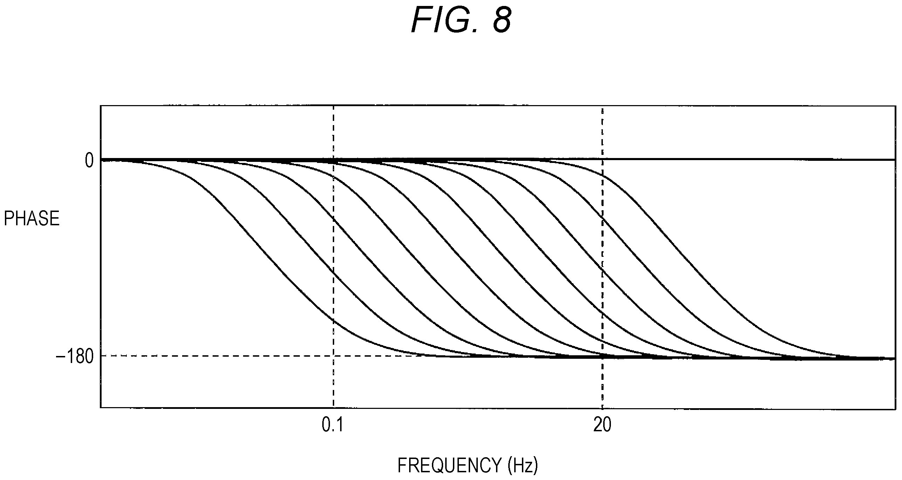

For obtaining the vibration level r for input of the original signal O in the band from 0.1 Hz to 20 Hz, for example, three or more level calculation signals, or the original signal and two or more level calculation signals are dispersed within 180 degrees with equalized phase differences throughout the band from 0.1 Hz to 20 Hz as illustrated in Fig. 8. In this case, the accurate signal level r is detectable for input of the original signal in the band from 0.1 Hz to 20 Hz.

Accordingly, for detecting the vibration level r with improved accuracy for a signal in a wide frequency band, the signal generation unit 21 generates the level calculation signals L1 through L5 for input of the original signal O such that the original signal O and the level calculation signals L1 through L5 contributing to detection of the vibration level r are dispersed with equal phase differences of 60 degrees or smaller for each within the range of 180 degrees. When three level calculation signals having phase differences of 60 degrees for each are generated to obtain the vibration level r, the vibration level r does not become lower than at least 0.85 of a wave height of the original signal O of an object in representation of signals by sine waves. Accordingly, the preferable vibration level r is obtainable. When the original signal O is used only for generation of the level calculation signals, the signal generation unit 21 generates the level calculation signals L1 through L5 dispersed with equalized phase differences of 60 degrees or smaller for each within the range of 180 degrees as signals contributing to detection of the vibration level r. In this case, the vibration level r is detectable with improved accuracy for signals in a wide frequency band.

When a large number of the level calculation signals are generated, each of the equalized phase differences between the level calculation signals becomes small within the phase range of 180 degrees for input of the original signal O at a certain frequency. In this case, the vibration level r may indicate the second or third largest absolute value of the level calculation signals, or an average value of the largest value and the second largest value, instead of the largest absolute value of the level calculation signals. No substantial problem arises from this configuration. When the 12 level calculation signals are generated with phase differences of 15 degrees for each for a signal of a sine wave, the vibration level r indicating the third largest absolute value of the level calculation signals does not become smaller than at least 0.9 of the wave height of the original signal O of an object. Accordingly, the preferable vibration level r is obtainable. Needless to say, it is preferable that the vibration level r indicates the largest value based on the fact that the largest absolute value of the level calculation signals is closest to the actual vibration level r.

According to the vibration level detection unit 2 described above, the signal generation unit 21 of the vibration level detection unit 2 generates the level calculation signals L1 through L5 from the original signal O, while the signal level calculation unit 22 obtains the vibration level r from the original signal O and the level calculation signals L1 through L5. However, the signal level calculation unit 22 may obtain the vibration level r based on the original signal O, and one or both of an integrated value and a differential value of the original signal O, while eliminating the signal generation unit 21.

Vibration of the sprung member B at an arbitrary frequency may be represented in a sine wave. Similarly, an arbitrary frequency component of the original signal O corresponding to a sprung speed of the sprung member B may be represented in a sine wave. When an arbitrary frequency component of the original signal O is represented as $\sin\omega t$ ($\omega$: angular frequency, t: time), for example, an integrated value of this frequency component is $-(1/\omega)\cos\omega t$. In this case, an amplitude of the integrated value becomes $1/\omega$ of an amplitude of the original signal O according to comparison between the amplitude of the original signal O and the amplitude of the integrated value.

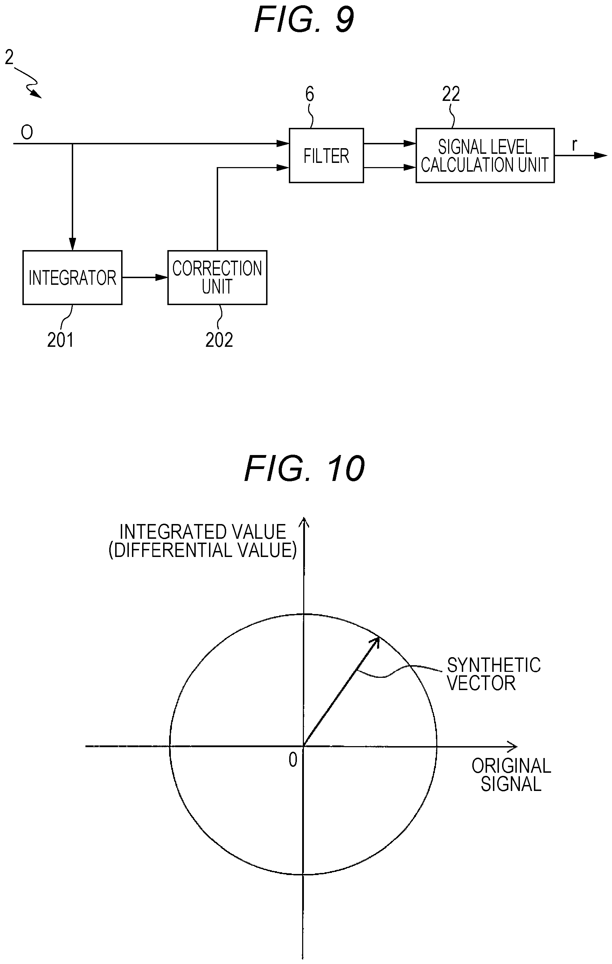

Fig. 9 illustrates a modified example of the signal level detection unit 2 which includes a filter 6 for extracting an arbitrary frequency component from the original signal O. The original signal O is integrated by an integrator 201 at an angular frequency $\omega$ corresponding to the frequency extracted by the filter 6. The integrated value of the original signal O is multiplied by $\omega$ by a correction unit 202 for correction to equalize the amplitude of the integrated value with the amplitude of the original signal O. In addition, a differential value of the original signal O is multiplied by $1/\omega$ for correction to equalize the amplitude of the differential value with the amplitude of the original signal O.

Subsequently, the original signal O and the integrated value (differential value) processed as described above are represented by a rectangular coordinate system as illustrated in Fig. 10. The signal level calculation unit 22 calculates a length of a synthetic vector of the original signal O and the integrated value or the differential value, and determines the calculated length as the vibration level r. The length of the synthetic vector is obtained by calculating a square root of a sum of a squared value of the original signal O and a squared value of the integrated value (differential value). However, the sum of the squared value of the original signal O and the squared value of the integrated value (differential value), i.e., a squared value of the length of the synthetic vector may be calculated to obtain a value for determining the length of the synthetic vector without performing root calculation. In this case, the value thus obtained is determined as the vibration level r. This configuration eliminates root calculation requiring a heavy load, thereby reducing calculation time. In addition, an nth power (n: arbitrary value) of the length of the synthetic vector, or the length of the synthetic vector multiplied by an arbitrary coefficient, each of which is not a value directly indicating the length of the synthetic vector, becomes a value based on which the length of the synthetic vector is determinable. Accordingly, these values may be adopted as a vibration level. In other words, a value based on which the length of the synthetic vector is determinable may be adopted as the vibration level r. The signal level calculation unit 22 having this configuration easily calculates the vibration level r, wherefore processing does not impose a heavy load.

According to this embodiment, the largest sprung resonant frequency component of the vibration components of the spring member B is determined as the vibration level r of the sprung member B. Accordingly, the filter 6 may be constituted by a band-pass filter capable of extracting a signal in a sprung resonance frequency band of a sprung resonance frequency corresponding to the frequency of the extracted signal. For obtaining the vibration level r of the unsprung member W, the filter 6 may be constituted by a band-pass filter capable of extracting a signal in an unsprung resonance frequency band.

When the original signal O and the integrated value (differential value) are corrected at the angular frequency $\omega$, the amplitudes of both the original signal O and the integrated value (differential value) are equalized. However, the phases of the original signal O and the integrated value (differential value) deviate from each other by 90 degrees. Accordingly, it is understood that ideal loci of the original signal O and the integrated value (differential value) become a circle, and that the vibration level r becomes equivalent to a radius of this circle as illustrated in Fig. 10 when the sprung member B repeats the same vibration without attenuation. In reality, the respective amplitudes do not completely coincide with each other in some cases depending on extraction accuracy of the filter 6, or due to disturbance acting on the sprung member B and noise contained in the original signal O and the integrated value (differential value). However, the value of the vibration level r becomes substantially equivalent to the radius of the foregoing circle.

As apparent from above, the absolute value of the integrated value corresponding to displacement, or the absolute value of the differential value corresponding to acceleration becomes the largest value even when the sprung speed corresponding to the original signal O is zero. Conversely, the absolute value of the sprung speed corresponding to the original signal O becomes the largest value even when the absolute value of the integrated value corresponding to displacement, or the absolute value of the differential value corresponding to acceleration is zero. The vibration level r therefore maintains a constant value in an ideal condition when the vibration situation of the spring member B does not change. The vibration level r therefore becomes an index indicating the degree of the amplitude of the sprung member B, and represents a magnitude of vibration. For calculation of the vibration level r, sampling of any one of displacement, speed, and acceleration of the sprung member B in one cycle for obtaining a wave height is not needed. As can be understood from the foregoing procedures, only calculation of displacement and speed, or speed and acceleration of the sprung member B is needed to obtain the vibration level r. Accordingly, the vibration level r is timely obtainable. In other words, vibration of the sprung member B or the unsprung member W, and magnitudes of other signals are detectable timely and in real time even by the foregoing configuration of the signal level calculation unit 22.

Alternatively, the vibration level r may indicate an average value of a first vibration level r1 calculated based on the original signal O and the integrated value, and a second vibration level r2 calculated based on the original signal O and the differential value.

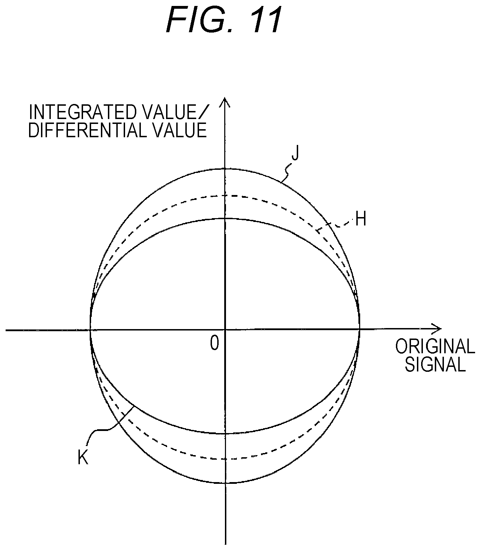

Considered herein is a rectangular coordinate system which has a horizontal axis representing the original signal O, and a vertical axis representing the integrated value and the differential value as illustrated in Fig. 11. When a deviation is produced between a vibration frequency of the sprung member B and a frequency extracted by the filter 6, a locus J of the original signal O and the integrated value draws an elliptical shape in a state that the first vibration level r1 has a value of the maximum of the original signal O or larger. This elliptical shape of the locus J is larger than a circle H having a radius corresponding to the maximum of the original signal O as indicated by a broken line in Fig. 11. On the other hand, a locus K of the original signal O and the differential value draws an elliptical shape in a state that the second vibration level r2 has the maximum of the original signal O or smaller. The elliptical shape of the locus K is smaller than the circle H. In this case, a deviation is produced between an actual angular frequency $\omega'$ and the angular frequency $\omega$ given for correction to equalize the amplitudes of the integrated value and the differential value with the amplitude of the original signal O when the vibration frequency to be detected does not coincide with the vibration frequency of the sprung member B. Accordingly, the maximum of the integrated value becomes $\omega/\omega'$ of the maximum value of the original signal O at the time of correction of the integrated value of the original signal O, while the maximum of the differential value becomes $\omega'/\omega$ of the maximum value of the original signal O at the time of correction. As apparent from above, the second vibration level r2 becomes a value smaller than the original signal O when the first vibration level r1 becomes a value larger than the original signal O. Accordingly, an average of the first vibration level r1 and the second vibration level r2 is determined as the vibration level r to reduce fluctuations of the vibration level r. As a result, the vibration level r becomes sufficiently stable, and produces preferable detection results of the vibration level r even when the vibration frequency to be detected does not coincide with the vibration frequency of the sprung member B.

The variable low-pass filter 3 is now touched upon. The variable low-pass filter 3 is a low-pass filter capable of varying the cut-off frequency $\omega c$ in response to an instruction issued from the frequency varying unit 4, and is configured to filter and output the vibration level r detected by the signal level detection unit 2.

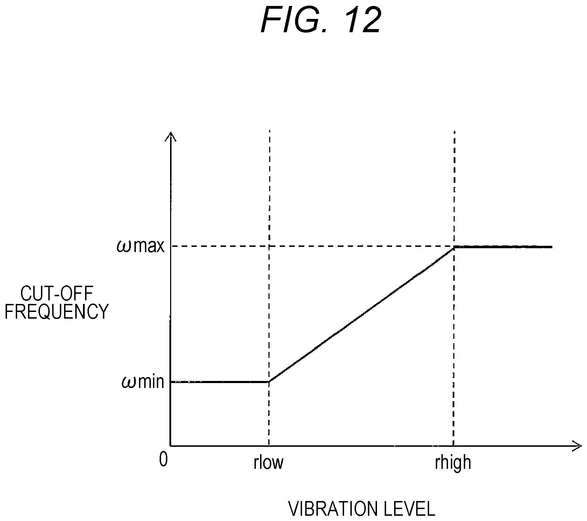

The frequency varying unit 4 calculates the cut-off frequency $\omega c$ of the variable low-pass filter 3 based on the signal level r obtained by the signal level detection unit 2, and switches the cut-off frequency of the variable low-pass filter 3 to the obtained cut-off frequency $\omega c$. More specifically, the frequency varying unit 4 retains a map showing a relationship between the vibration level r and the cut-off frequency $\omega c$ as illustrated in Fig. 12, and performs map calculation by using the map to obtain the cut-off frequency $\omega c$ when receiving input of the vibration level r. In this map, the cut-off frequency $\omega c$ increases as the value of the vibration level r increases in a range between a low value rlow of the vibration level r and a high value rhigh of the vibration level r. On the other hand, the value of the cut-off frequency $\omega c$ becomes a minimum $\omega min$ when the value of the vibration level r is the low value rlow or lower, and becomes a maximum $\omega max$ when the value of the vibration level r is the high value rhigh or higher. The signal level detection device 1 is configured to detect the vibration level r of the sprung member B of the vehicle. A component of an unsprung resonance frequency is superimposed on the vibration component of the sprung member B as well as the vibration component of the sprung resonant frequency (1 Hz to 2 Hz). According to this embodiment, therefore, the minimum $\omega min$ and the maximum $\omega max$ of the cut-off frequency $\omega c$ are set to approximately 0.5 Hz and approximately 5 Hz, respectively, so as to remove the component of the unsprung resonance frequency and noise, and extract a component in the sprung resonance frequency band. Values of the minimum $\omega min$ and the maximum $\omega max$ of the cut-off frequency $\omega c$ may be set to appropriate values for a frequency band of a signal to be obtained. According to this embodiment, the low value rlow and the high value rhigh are contained in the map of the vibration level r and the cut-off frequency ωc to define a boundary of the minimum ωmin of the cut-off frequency ωc and a boundary of the maximum ωmax of the cut-off frequency ωc. This configuration defines an allowable range of the cut-off frequency ωc, and therefore achieves both removal of a ripple at the time of a large value of the vibration level r, and removal of noise at the time of a small value of the vibration level r. According to the foregoing description, the cut-off frequency ωc is calculated based on the vibration level r. However, the cut-off frequency ωc may be obtained based on information referred to for estimating the magnitude of the vibration level r. The signal level detection device 1 in this embodiment detects the vibration level r of vibration in the up-down direction of the sprung member B of the vehicle, wherefore the information referred to for estimating a magnitude of the vibration level r may indicate sprung displacement, sprung speed, and sprung acceleration of the sprung member B of the vehicle in the up-down direction, and relative displacement, relative speed, and relative acceleration between the sprung member B and the unsprung member W of the vehicle, for example. When the vibration level r of the sprung member B is high, the sprung displacement, sprung speed, and sprung acceleration of the sprung member B of the vehicle in the up-down direction, and the relative displacement, relative speed, and relative acceleration between the sprung member B and the unsprung member W of the vehicle tend to increase, exhibiting correlations between these types of information and the vibration level r. Accordingly, the relationship between these types of information and the cut-off frequency ωc is mapped so that the cut-off frequency ωc can be obtained based on these types of information. The information on the relative displacement, relative speed, and relative acceleration between the sprung member B and the unsprung member W of the vehicle is available through detection of a stroke of a damper D interposed between the sprung member B and the unsprung member W. When the signal level detection device 1 detects the vibration level r of vibration of the unsprung member W of the vehicle in the up-down direction, the information referred to for estimating the magnitude of the vibration level r may indicate a vehicle speed corresponding to a traveling direction speed of the vehicle, a wheel speed corresponding to a rotation speed of a wheel, and unsprung displacement, unsprung speed, and unsprung acceleration of the unsprung member W in the up-down direction, for example. When the vehicle speed or the wheel speed is high, the vibration level r of the unsprung member W tends to increase. In this case, the unsprung displacement, unsprung speed, and unsprung acceleration of the unsprung member W in the up-down direction tend to similarly increase, exhibiting correlations between these types of information and the vibration level r. Accordingly, the relationship between these types of information and the cut-off frequency ωc is mapped so that the cut-off frequency ωc can be obtained from these types of information.

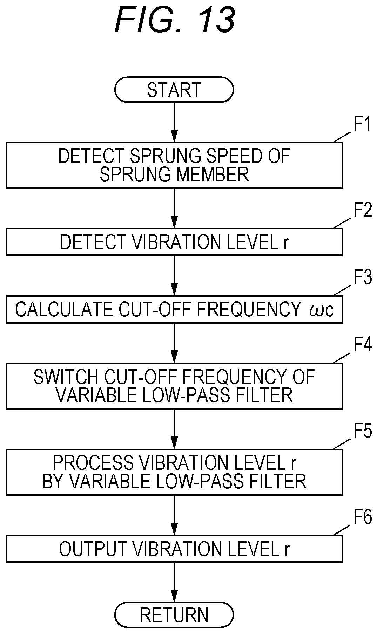

Operation of the signal level detection device 1 having the above configuration is hereinafter described. Processing procedures of the signal level detection device 1 illustrated in Fig. 1 are explained with reference to a flowchart shown in Fig. 13. Initially, the signal level detection device 1 detects a sprung speed of the sprung member B by using the sensor unit 5 (step F1). The signal level detection device 1 detects the vibration level r based on the original signal O corresponding to the sprung speed (step F2). More specifically, when the original signal O is input to the signal level detection unit 2, the signal generation unit 21 generates the five level calculation signals L1 through L5. The signal level calculation unit 22 converts the original signal O and the level calculation signals L1 through L5 into absolute values, and determines the largest value of the absolute values as the vibration level r. Subsequently, the signal level detection device 1 calculates the cut-off frequency ωc of the variable low-pass filter 3 from the obtained vibration level r (step F3). More specifically, the frequency varying unit 4 receives input of the vibration level r, and calculates the cut-off frequency ωc based on the vibration level r. Thereafter, the frequency varying unit 4 switches the cut-off frequency of the variable low-pass filter 3 to the cut-off frequency ωc calculated as above (step F4). More specifically, the frequency varying unit 4 outputs a switch command to the variable low-pass filter 3 to switch the cut-off frequency of the variable low-pass filter 3 to the cut-off frequency ωc. The variable low-pass filter 3 having received the switch command switches the cut-off frequency of the variable low-pass filter 3 to the cut-off frequency ωc calculated by the frequency varying unit 4. Subsequently, the signal level detection device 1 processes the vibration level r by using the variable low-pass filter 3 (step F5). Finally, the vibration level detection device 1 outputs the vibration level r filtered by the variable low-pass filter 3 (step F6). The signal level detection device 1 successively executes a series of the foregoing processing procedures to repeatedly obtain and output the vibration level r.

The cut-off frequency of the variable low-pass filter 3 is switched to a high frequency when the vibration level r is high. In this case, reduction of a delay of a change of the vibration level r is achievable by the signal level detection device 1 in a state that the vibration level r greatly rises. Accordingly, the vibration level r to be output is not greatly delayed from the vibration level r obtained by the signal level detection unit 2.

On the other hand, the cut-off frequency of the variable low-pass filter 3 is switched to a low frequency when the vibration level r is low. In this case, removal of a noise component superimposed on the vibration level r is achievable by the signal level detection device 1 in a state that the vibration level r is low. Accordingly, the output vibration level r becomes highly reliable.

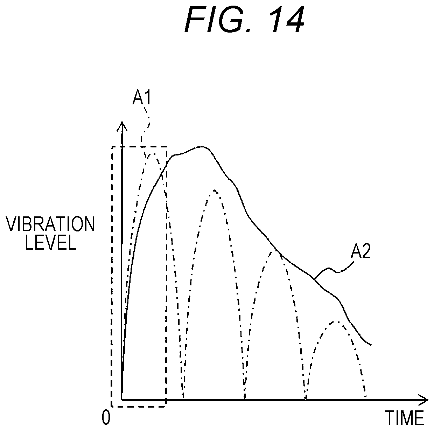

The signal level detection device 1 is therefore capable of outputting the vibration level r indicated by a line A2 in Fig. 14 while reducing a delay from a change of the sprung speed indicated by a line A1 in an area surrounded by a broken line where the sprung speed of the sprung member B sharply rises as illustrated in Fig. 14. Note that Fig. 14 shows an absolute value of the sprung speed for comparison between the vibration level r and the sprung speed. Under a situation that the sprung speed rises, the actual vibration level becomes substantially equivalent to the sprung speed shown in the figure. The vibration level r obtained by the signal level detection device 1 according to the present invention follows the rise of this sprung speed.

Accordingly, the signal level detection device 1 of the present invention reduces a delay of a rise of an obtained signal level from an actual signal level. The signal level detection device 1 is therefore applicable to control required to be highly responsive. A control device of this type offers preferable control results when equipped with including the signal level detection device 1. In addition, when a signal level is extremely low, sufficient removable of noise superimposed on the obtained signal level is achievable. In this case, the S/N ratio of the signal level increases, whereby reliability of an output signal level improves. Accordingly, control performance of a control device including the signal level detection device 1 does not deteriorate. As apparent from above, the signal level detection device 1 according to the present invention is capable of improving control performance regardless of the degree of the signal level.

Moreover, the frequency varying unit 4 increases the cut-off frequency $\omega c$ of the variable low-pass filter 3 as the vibration level r increases. In this case, the cut-off frequency $\omega c$ increases to an optimum value in accordance with a rise of the vibration level r. Accordingly, reduction of a delay of a rise of the vibration level r, and removal of a ripple component from the obtained vibration level r are both achievable. Alternatively, the frequency varying unit 4 may calculate the cut-off frequency $\omega c$ based on information for estimating a magnitude of the vibration level r, rather than by using the vibration level r itself. In this case, the frequency varying unit 4 may increase the cut-off frequency $\omega c$ in accordance with increase in the vibration level r indicated by the information.

<Second Embodiment>

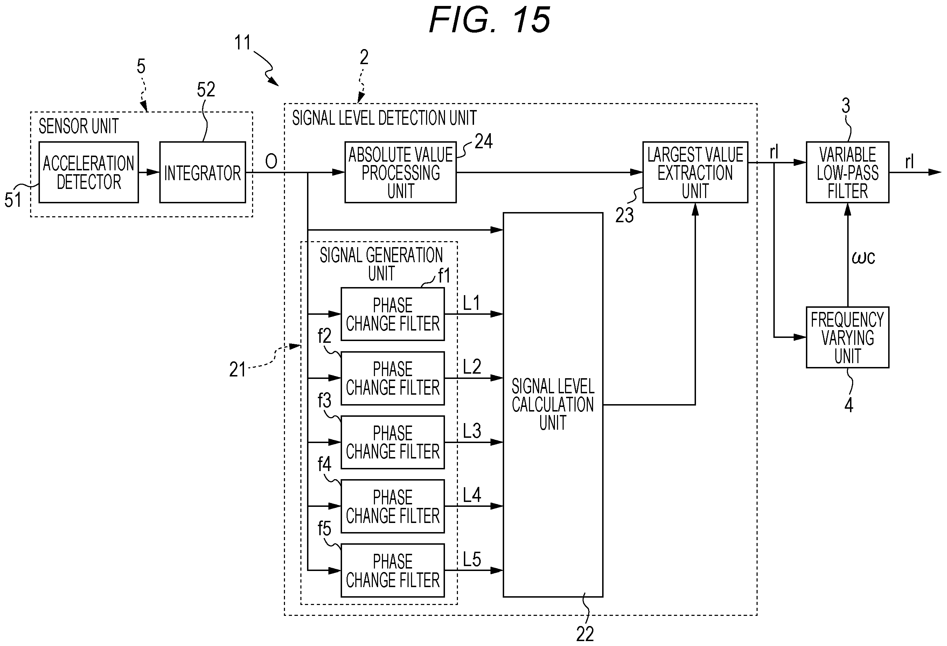

A signal level detection device 11 according to a second embodiment illustrated in Fig. 15 is hereinafter described. The signal level detection device 11 of the second embodiment includes a largest value extraction unit 23 in the signal level detection unit 2 in addition to the structure of the signal level detection device 1 according to the first embodiment. The largest value extraction unit 23 selects the signal having a larger value of the original signal O and the vibration level r obtained by the signal level calculation unit 22, determines the selected value as a vibration level rl, and outputs the vibration level rl.

More specifically, the signal level detection device 11 according to the second embodiment additionally includes an absolute value processing unit 24 to convert the original signal O into an absolute value, and input the absolute value to the largest value extraction unit 23.

As described in the first embodiment, the signal level calculation unit 22 always outputs the vibration level r as a positive value by conversion into an absolute value. Accordingly, conversion of the original signal O into an absolute value is needed to allow a comparison between the original signal O and the vibration level r by the largest value extraction unit 23.

The largest value extraction unit 23 compares the original signal O and the vibration level r output from the signal level calculation unit 22, determines which is the larger value of the original signal O and the vibration level r, and extracts and outputs the signal having the larger value as the vibration level rl to be output.

In this case, the frequency varying unit 4 receives input of the vibration level rl from the largest value extraction unit 23, calculates the cut-off frequency $\omega c$ of the variable low-pass filter 3 based on the vibration level rl, and switches the cut-off frequency of the variable low-pass filter 3 to the obtained cut-off frequency $\omega c$. After switching the cut-off frequency of the variable low-pass filter 3 to the cut-off frequency $\omega c$ calculated by the frequency varying unit 4, the variable low-pass filter 3 executes a filtering process for the vibration level rl output from the largest value extraction unit 23, and outputs the final vibration level rl.

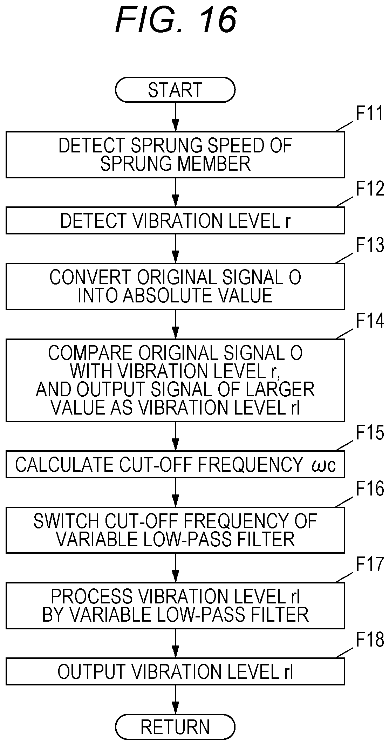

When the vibration level rl of the sprung member B is obtained as a signal level from a sprung speed, specific processing shown in Fig. 16 is performed by the signal level detection device 11, for example. Initially, the signal level detection device 11 detects a sprung speed of the sprung member B by using the sensor unit 5 (step F11). The signal level detection device 11 detects the vibration level r based on the original signal O corresponding to the sprung speed (step F12). More specifically, the original signal O is input to the signal level detection unit 2. The signal generation unit 21 generates the five level calculation signals L1 through L5. The signal level calculation unit 22 converts the original signal O and the level calculation signals L1 through L5 into absolute values, and determines the largest value of the calculated absolute values as the vibration level r. The signal level detection device 11 further converts the original signal O into an absolute value (step F13). The signal level detection device 11 further compares the original signal O converted into an absolute value and the vibration level r, determines the signal having a larger value of the original signal O and the vibration level r, and outputs the determined signal as the vibration level rl (step F14). Subsequently, the signal level detection device 11 calculates the cut-off frequency $\omega c$ of the variable low-pass filter 3 from the vibration level rl obtained in step F14 (step F15). Thereafter, the cut-off frequency of the variable low-pass filter 3 is switched to the cut-off frequency $\omega c$ obtained as described above (step F16). The signal level detection device 11 further processes the vibration level rl by using the variable low-pass filter 3 (step F17). Finally, the vibration level detection device 11 outputs the vibration level rl filtered by the variable low-pass filter 3 (step F18). The signal level detection device 11 successively executes a series of the foregoing processing procedures to repeatedly obtain and output the vibration level rl.

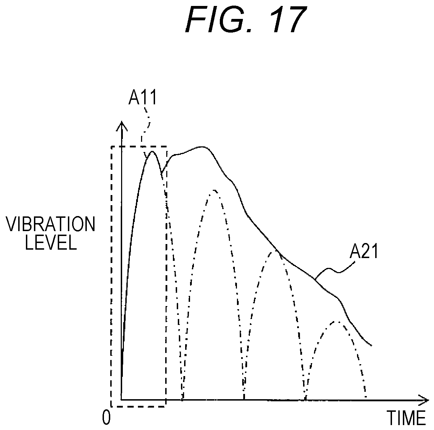

The signal level detection device 11 according to the second embodiment compares the vibration level r obtained by the signal level calculation unit 22 with the original signal O not delayed from actual vibration, and outputs the largest value as the vibration level rl. Accordingly, the obtained vibration level rl follows the actual vibration level without delay when vibration of a vibration level detection target such as the sprung member B starts to increase. Accordingly, as illustrated in Fig. 17, the signal level detection device 11 of the second embodiment is capable of outputting the vibration level r indicated by a line A21 while reducing a delay from a change of the sprung speed indicated by a line A11 in an area surrounded by a broken line where the sprung speed of the sprung member B sharply rises as indicated by the line A11. The vibration level r obtained by the signal level detection device 1 according to the present invention follows this rise of the sprung speed. Under a situation that the sprung speed rises, the actual vibration level becomes substantially equivalent to the sprung speed shown in the figure. The vibration level r obtained by the signal level detection device 1 according to the present invention follows the rise of this sprung speed. In addition, when the sprung speed increases and then decreases, the vibration level r obtained by the signal level calculation unit 22 becomes slightly larger than the actual vibration level. However, the vibration level r follows the actual vibration level. In this situation, the largest value extraction unit 23 switches the signal to be selected from the original signal O to the vibration level r. Accordingly, the signal level detection device 11 is capable of detecting the vibration level with high accuracy.

The signal level detection device 11 of the second embodiment is therefore capable of eliminating a delay of a rise of an obtained signal level from an actual signal level, and also detecting the signal level with high accuracy when the actual signal level starts to increase. Accordingly, the signal level detection device 11 is suitable for control required to be highly responsive, and more effectively offers preferable control results. According to this embodiment, the cut-off frequency ωc of the variable low-pass filter 3 is similarly switched to a lower value as a signal level lowers based on the signal level or information referred to for estimating the signal level. In this case, noise superimposed on the obtained signal level is sufficiently removed when the signal level is extremely low. Accordingly, reliability of an output signal level improves even in case of an extremely low signal level, wherefore control performance of a control device including this configuration does not deteriorate. As apparent from above, the signal level detection device 11 according to the present invention is capable of more effectively improving control performance regardless of the degree of the signal level.

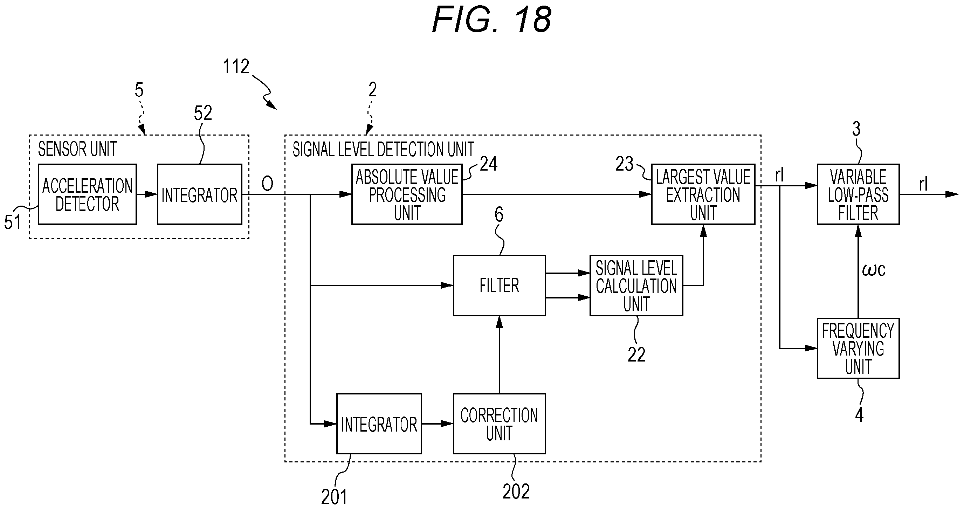

As illustrated in Fig. 15, the signal level detection unit 2 according to this embodiment includes the signal generation unit 21 which generates the two or more level calculation signals L1 through L5 having different phases from the original signal O. However, a configuration of a signal level detection device 112 illustrated in Fig. 18 is also adoptable as a modified example of the second embodiment. The signal level detection device 112 eliminates the signal generation unit 21, and additionally includes the filter 6, the integrator 201 (or differentiator), and the correction unit 202. In this case, the signal level calculation unit 22 obtains the vibration level r based on the original signal O and either one or both of a differential value and an integrated value of the original signal O.

<Third Embodiment>

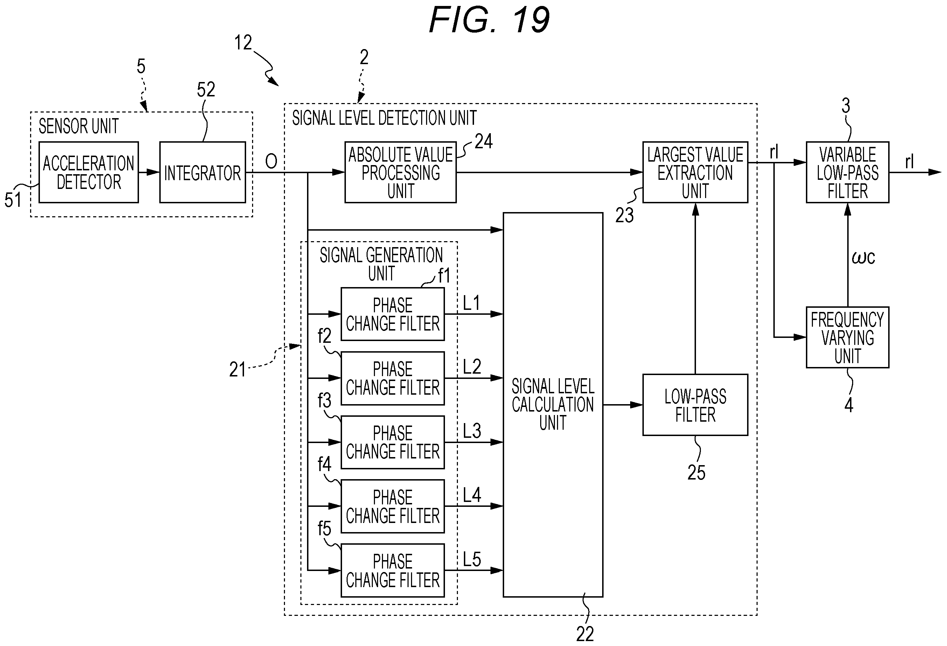

The configuration of the signal level detection device 11 according to the second embodiment may further include a low-pass filter 25 to constitute a signal level detection device 12 according to a third embodiment as illustrated in Fig. 19. The low-pass filter 25 included in the signal level detection unit 2 filters the vibration level r received from the signal level calculation unit 22, and outputs the filtered vibration level r to the largest value extraction unit 23. A cut-off frequency of the low-pass filter 25 is set to a frequency between the minimum and the maximum of the variable cut-off frequency ωc of the variable low-pass filter 3 to remove a ripple of the vibration level r calculated by the signal level calculation unit 22.

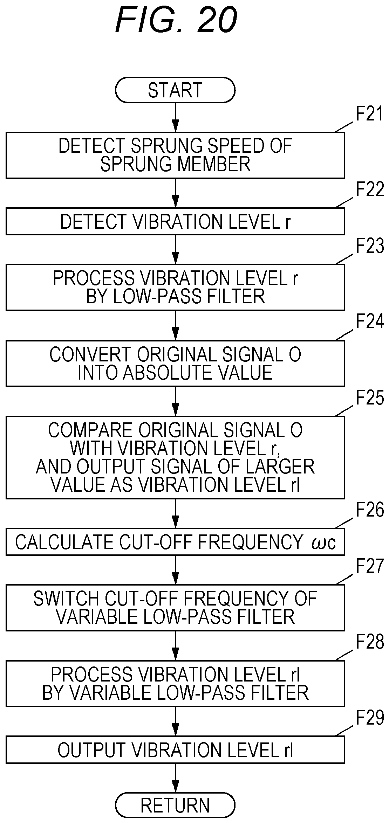

When the vibration level rl of the sprung member B is obtained as a signal level based on a sprung speed, specific processing shown in Fig. 20 is performed by the signal level detection device 12, for example. Initially, the signal level detection device 12 detects a sprung speed of the sprung member B by using the sensor unit 5 (step F21). The signal level detection device 12 determines the sprung speed as the original signal O, and detects the vibration level r (step F22). Subsequently, the signal level detection device 12 filters the obtained vibration level r by using the low-pass filter 25 (step F23). The signal level detection device 12 further converts the original signal O into an absolute value (step F24). The signal level detection device 12 compares the original signal O converted into an absolute value with the vibration level r processed by the low-pass filter 25, and outputs the signal having a larger value as the vibration level rl (step F25). The signal level detection device 12 further calculates the cut-off frequency ωc of the variable low-pass filter 3 from the vibration level rl obtained in step F25 (stepF26). Thereafter, the cut-off frequency of the variable low-pass filter 3 is switched to the cut-off frequency ωc obtained in the manner described above (step F27). The signal level detection device 12 further processes the vibration level rl (step F28) by using the variable low-pass filter 3. Finally, the vibration level detection device 12 outputs the vibration level rl filtered by the variable low-pass filter 3 (step F29).

The signal level detection device 12 successively executes a series of the foregoing processing procedures to repeatedly obtain and output the vibration level rl.

The signal level detection device 12 according to the third embodiment is therefore capable of reducing a delay of a rise of an obtained signal level from an actual signal level, and improving reliability of a signal level to be output even when the signal level is extremely low. Accordingly, the signal level detection device 12 produces preferable control results, and also offers following advantageous effects.

A high-frequency ripple component contained in the vibration level r calculated by the signal level calculation unit 22 is removed by the low-pass filter 25. Accordingly, the vibration level rl does not vibrationally change. The cut-off frequency of the low-pass filter 25 lies between the maximum and the minimum of the cut-off frequency $\omega c$ of the variable low-pass filter 3. Accordingly, a high-frequency ripple is securely removed from the vibration level rl output from the signal level detection device 13 even when the cut-off frequency $\omega c$ of the variable low-pass filter 3 increases with a rise of the vibration level rl.

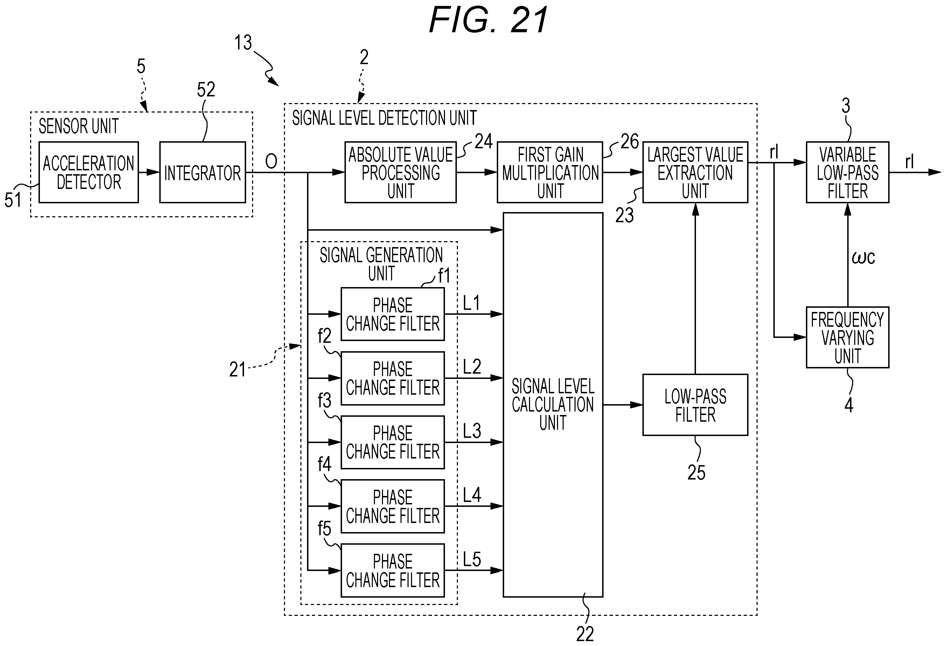

A signal level detection device 13 according to a fourth embodiment illustrated in Fig. 21 is now described. The signal level detection device 13 of the fourth embodiment includes, in addition to the configuration of the signal level detection device 12 of the third embodiment, a first gain multiplication unit 26 which multiplies the original signal O input to the largest value extraction unit 23 by a first proportional gain on the downstream side of the absolute value processing unit 24.

<Fourth Embodiment>

According to the level detection device 13 of the fourth embodiment, the first gain multiplication unit 26 is configured to multiply the original signal O converted into an absolute value by the first proportional gain smaller than 1, and outputs the multiplied original signal O.

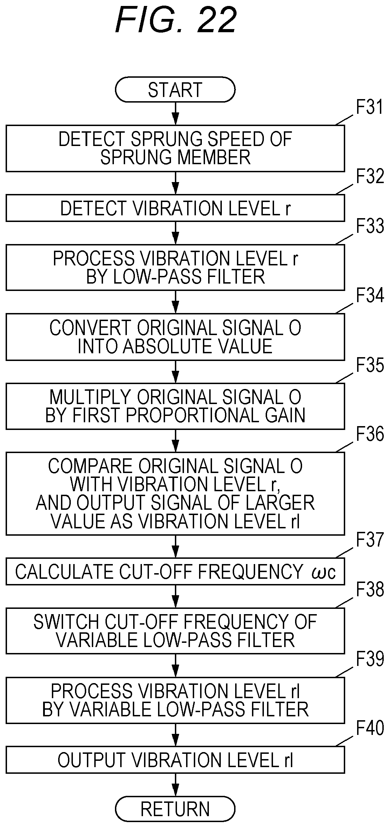

When the vibration level rl of the sprung member B is obtained as a signal level based on a sprung speed, specific processing shown in Fig. 22 is performed by the signal level detection device 13, for example. Initially, the signal level detection device 13 detects a sprung speed of the sprung member B by using the sensor unit 5 (step F31). The signal level detection device 13 determines the sprung speed as the original signal O, and detects the vibration level r (step F32). Subsequently, the signal level detection device 13 filters the obtained vibration level r (step F33) by using the low-pass filter 25. The signal level detection device 13 further converts the original signal O into an absolute value (step F34). The signal level detection device 13 multiplies the original signal O converted into an absolute value by the first proportional gain (step F35). The signal level detection device 13 compares the original signal O multiplied by the first proportional gain with the vibration level r processed by the low-pass filter 25, and outputs the signal having a larger value as the vibration level rl (step F36). The signal level detection device 13 further calculates the cut-off frequency $\omega c$ of the variable low-pass filter 3 from the vibration level rl obtained in step F36 (step F37). Thereafter, the cut-off frequency of the variable low-pass filter 3 is switched to the cut-off frequency $\omega c$ obtained in the manner described above (step F38). The signal level detection device 13 further processes the vibration level rl by using the variable low-pass filter 3 (step F39). Finally, the vibration level detection device 13 outputs the vibration level rl filtered by the variable low-pass filter 3 (step F40). The signal level detection device 13 successively executes a series of the foregoing processing procedures to repeatedly obtain and output the vibration level rl.

Accordingly, the signal level detection device 13 of the fourth embodiment configured to multiply the original signal O by the first proportional gain smaller than 1 determines the original signal O multiplied by the first proportional gain as the vibration level rl, and outputs the vibration level rl in an initial stage of a sharp rise of the actual vibration level.

The signal level detection device 13 of the fourth embodiment is therefore capable of reducing a delay of a rise of an obtained signal level from an actual signal level, and also detecting a signal level with high accuracy. Accordingly, the signal level detection device 13 improves reliability of a signal level to be output, and obtains preferable control results even when the signal level is extremely low. In addition, the signal level detection device 13 offers following advantageous effects.

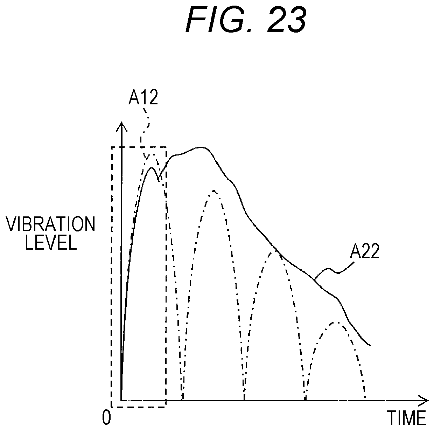

As illustrated in Fig. 23, the signal level detection device 13 according to the fourth embodiment outputs the vibration level rl indicated by a line A22 rising with high followability for a change of the sprung speed of the sprung member B indicated by a line A12 even while producing a slight delay in an area surrounded by a broken line where the sprung speed sharply rises as indicated by the line A12. Moreover, this configuration decreases a gap produced at signal connection when the largest value extraction unit 23 switches the original signal O multiplied by the first proportional gain to the vibration level r obtained by the signal level calculation unit 22 and outputs the vibration level r. Accordingly, this configuration reduces a sharp change of a change rate of the vibration level rl.

When the vibration level r obtained by the signal level calculation unit 22 is processed by the low-pass filter 25, the processed vibration level r is delayed from the actual vibration level. However, the amplitude of the original signal O decreases after the original signal O is multiplied by the first proportional gain smaller than 1. Accordingly, a sharp change of the change rate of the vibration level r decreases at the time of switching to the vibration level r obtained by the signal level calculation unit 22 and delayed from the original signal O. A control device including the signal level detection device 13 according to the fourth embodiment therefore also reduces a sharp change of a control command output from the control device. Accordingly, control performance further effectively improves.

<Fifth Embodiment>

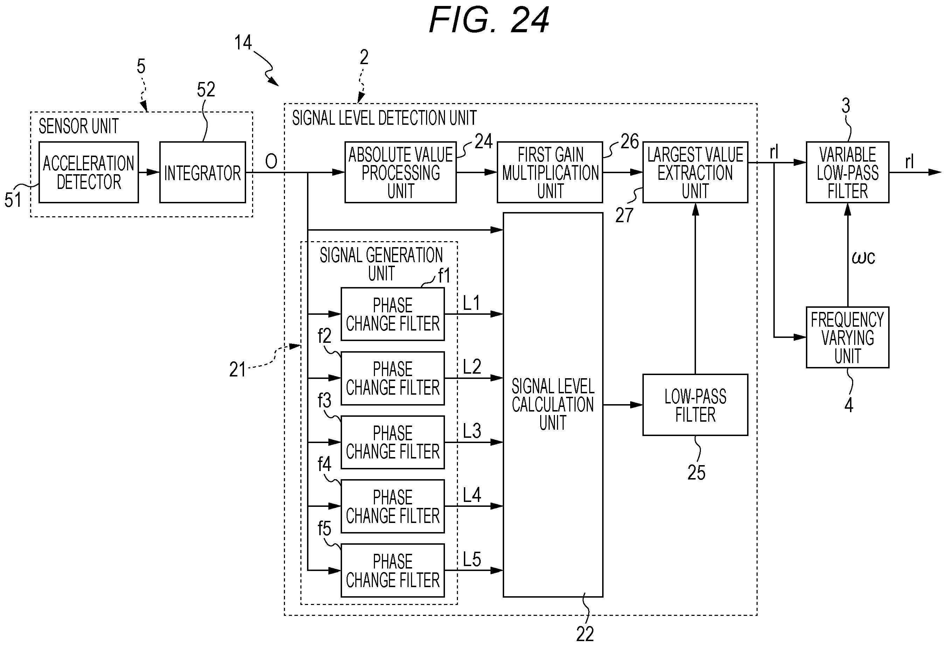

A signal level detection device 14 according to a fifth embodiment illustrated in Fig. 24 is now described. The signal level detection device 14 of the fifth embodiment performs processing different from the processing of the largest value extraction unit 23 included in the configuration of the signal level detection device 13 of the fourth embodiment. A largest value extraction unit 27 of the level detection device 14 according to the fifth embodiment outputs the largest signal of the original signal O and the vibration level r. In this case, the largest value extraction unit 27 outputs a smoothing signal for reducing a sharp change of a change rate of a signal corresponding to the vibration level rl when selection is switched from the original signal O to the vibration level r, or from the vibration level r to the original signal O.

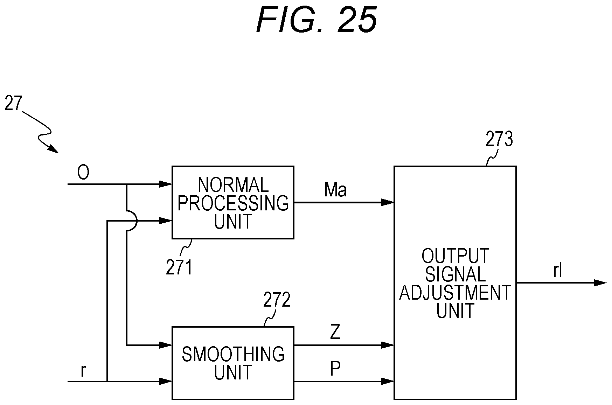

The largest value extraction unit 27 according to this embodiment performs a high-select process as illustrated in Fig. 25. Accordingly, the largest value extraction unit 27 includes a normal processing unit 271 which extracts a signal output by the high-select process from two signals O and r, and outputs the extracted signal as a largest signal Ma, a smoothing unit 272 which generates a smoothing signal P from the original signal O, the vibration level r, and a deviation $\varepsilon$ between the original signal O and the vibration level r, and an output signal adjustment unit 273 which selects the smoothing signal P generated by the smoothing unit 272 and outputs the signal P as the vibration level rl when the deviation $\varepsilon$ between the original signal O and the vibration level r lies within a specific range, or selects the largest signal Ma output from the normal processing unit 271 and outputs the largest signal Ma as the vibration level rl when the deviation $\varepsilon$ lies out of the specific range.

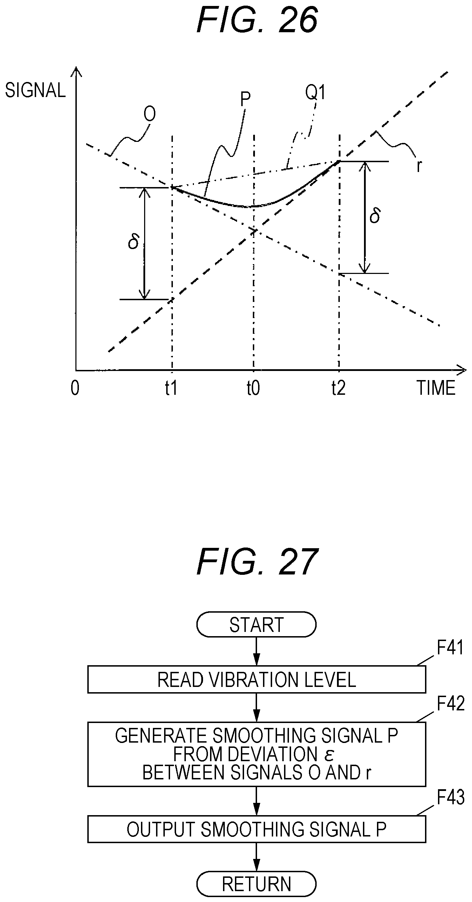

The smoothing unit 272 performs the high-select process for selecting a signal having a larger value. More specifically, the smoothing unit 272 generates, based on the deviation $\varepsilon$ between the two signals O and r of the original signal O and the vibration level r, the smoothing signal P having a value larger than the two signals O and r between two points of the smoothing signal P crossing the two signals O and r. For example, when the two signals O and r cross each other at a certain time in a state that the value of the original signal O decreases with an elapse of time, and that the value of the vibration level r increases with an elapse of time as illustrated in Fig. 26, the original signal O is selected before a time t0 at which the two signals O and r crosses. On the other hand, the vibration level r is selected after the time t0. The smoothing signal P is configured to decrease the difference between the two signals O and r when the deviation $\varepsilon$ is large, and increase the difference between the two signals O and r when the deviation $\varepsilon$ is small. The smoothing signal P connects the two signals O and r at the time of switching of the two signals O and r to reduce a sharp change of a change rate of the signals produced by signal switching. More specifically, the smoothing unit 272 generates the smoothing signal P by adding an addition value av calculated based on the deviation $\varepsilon$ to the signal having a larger value of the two signals O and r, or generates the smoothing signal P based on the values of the two signals O and r and the deviations . The smoothing signal P thus generated in accordance with the deviation $\varepsilon$ always has a value larger than the two signals O and r between the two points of the smoothing signal P crossing the two signals O and r, and connects the two signals O and r as illustrated in Fig. 26. As described above, the smoothing signal P is a signal which always has a value larger than both the signals O and r between the two points of the smoothing signal P crossing the two signals O and r. Accordingly, when the generated smoothing signal P is adopted from the intersection of the smoothing signal P and the original signal O to the intersection of the smoothing signal P and the vibration level r, a sharp change of the change rate of the signals O and r at the time of switching decreases in comparison with a method which directly switches a signal to be selected from the original signal O to the vibration level r at the time of switching between the two signals O and r. When the smoothing signal P draws a curve coming in contact with the signals O and r, the sharp change of the change rate of the signals further decreases.

Moreover, as illustrated in Fig. 26, the smoothing unit 272 may generate the smoothing signal P which has a smaller value than a straight line Q1 connecting coordinates of the value of the original signal O selected by high-select at a time t1 when the deviation $\varepsilon$ between the signals O and r becomes a threshold $\delta$ or smaller, and coordinates of the value of the vibration level r selected by high-select at a time t2 when the deviation $\varepsilon$ between the signals O and r exceeds the threshold $\delta$ after the time t0 in a plane of magnitude of signals and time, in addition to the condition that the smoothing signal P is always larger than the two signals O and r between the two points of the smoothing signal P crossing the two signals O and r. In this case, the smoothing signal P is so generated as to lie within a range surrounded by the straight line Q1, the original signal O from the time t1 to the time t0, and the vibration level r from the time t0 to the time t2 in Fig. 26.

The smoothing signal P generated by the largest value extraction unit 27 in this manner further securely reduces a sharp change of the change rate of the signals. When the smoothing signal P is output instead of the signals O and r in a state that the absolute value of the deviation $\varepsilon$ is the threshold $\delta$ or smaller, a sharp change of the change rate of the signals at the time of switching from the original signal O to the vibration level r, or from the vibration level r to the original signal O decreases. According to this embodiment, therefore, the threshold $\delta$ is a value defining a specific range for allowing output of the smoothing signal P as an effective signal instead of the signals O and r. Accordingly, the smoothing signal P is output only when the deviation $\varepsilon$ lies within the specific range. In this case, the smoothing signal P is adopted when signal switching is expected based on a state that the values of the two signals O and r are close to each other, and not adopted when the smoothing process is unnecessary based on a state that the values of the two signals O and r are different from each other.

For performing the process described above by using the smoothing unit 272, the signal level detection device 14 initially reads the original signal O and the vibration level r as shown in Fig. 27 (step F41). Subsequently, the signal level detection device 14 generates the smoothing signal P based on the original signal O, the vibration level r, and the deviation $\varepsilon$ between these signals O and r (step F42). Thereafter, the signal level detection device 14 outputs the smoothing signal P (step F43). The signal level detection device 14 successively executes a series of the foregoing processing procedures to repeatedly generate and output the smoothing signal P.

The normal processing unit 271 compares the original signal O and the vibration level r corresponding to the two input signals O and r, and determines the signal having a larger value as the largest signal Ma. The normal processing unit 271 is provided to perform the high-select process. The normal processing unit 271 compares values of the original signal O and the vibration level r, determines the signal having a larger value as the largest signal Ma, and outputs the determined signal to the output signal adjustment unit 273.

The output signal adjustment unit 273 selects either the smoothing signal P generated by the smoothing unit 272, or the largest signal Ma output from the normal processing unit 271, determines the selected signal as the vibration level rl, and outputs the vibration level rl. More specifically, according to this embodiment, either the smoothing signal P or the largest signal Ma is determined as the vibration level rl based on a smoothing determination signal Z received from the smoothing unit 272. The smoothing unit 272 outputs the smoothing determination signal Z having a value based on which whether or not the smoothing signal P is adoptable is determined when the absolute value of the deviation $\varepsilon$ between the signal O and r is the threshold $\delta$ or smaller and lies within the specific range, for example. On the other hand, the smoothing unit 272 outputs the smoothing determination signal Z having a value indicating a state that the largest signal Ma needs to be adopted when the absolute value of the deviation $\varepsilon$ between the signals O and r exceeds the threshold $\delta$ and lies out of the specific range. When the output signal adjustment unit 273 determines only whether to adopt the smoothing signal P, the smoothing determination signal Z may be only output or not output, i.e., an arbitrary value or zero may be only output as the smoothing determination signal Z. In addition, when the output signal adjustment unit 273 adds the faded-in smoothing signal P to the largest signal Ma, or fades out the smoothing signal P, the smoothing determination signal Z may be output as a gain multiplied by the smoothing signal P. Thereafter, the output signal adjustment unit 5 may add the smoothing signal P multiplied by this gain to the largest signal Ma to obtain the output signal O. Furthermore, the smoothing determination signal Z may be generated not by the smoothing unit 272, but by the output signal adjustment unit 273.

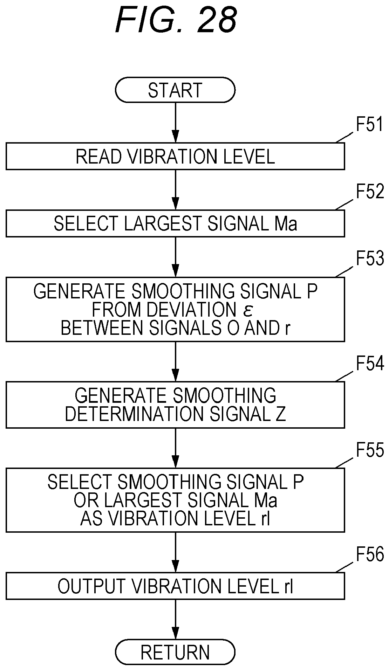

For performing the processing described above, the signal level detection device 14 initially reads the original signal O and the vibration level r obtained by the signal level calculation unit 22 (step F51) as illustrated in Fig. 28. Subsequently, the signal level detection device 14 selects the larger value of the original signal O and the vibration level r, and determines the selected value as the largest signal Ma (step F52). Thereafter, the signal level detection device 14 generates the smoothing signal P from the signals O and r, and the deviation $\varepsilon$ between the signals O and r (step F53). The signal level detection device 14 compares the deviation $\varepsilon$ between the signals O and r with the threshold $\delta$, and generates the smoothing determination signal Z (step F54). The signal level detection device 14 further performs a process for selecting either the smoothing signal P or the largest signal Ma based on the smoothing determination signal Z from the smoothing determination signal Z (step F55), and finally outputs the vibration level rl (step F56). The signal level detection device 14 successively executes a series of the foregoing processing procedures to repeatedly generate and output the vibration level rl.

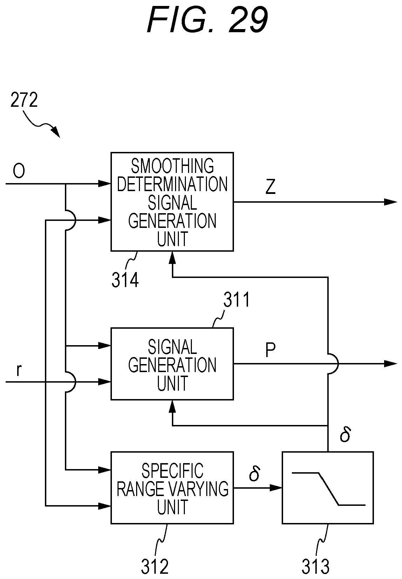

A specific configuration and processing of the smoothing unit 272 are now described. As illustrated in Fig. 29, a first configuration example of the smoothing unit 272 includes a signal generation unit 311 which calculates the deviation $\varepsilon$ between the original signal O and the vibration level r, and generates the smoothing signal P based on the deviation $\varepsilon$, a specific range varying unit 312 which varies a value of the threshold $\delta$ defining the specific range of smoothing for generation of the smoothing signal P, a sharp change reduction unit 313 which reduces a sharp change of the specific range, and a smoothing determination signal generation unit 314.

More specifically, the signal generation unit 311 calculates a first gain $G_1$ multiplied by the original signal O, and a second gain $G_2$ multiplied by the vibration level r based on the deviation $\varepsilon$ between the original signal O and the vibration level r, synthesizes a first addition signal $H_1$ obtained based on the value of the original signal O and the first gain $G_1$, and a second addition signal $H_2$ obtained based on the value of the vibration level r and the second gain $G_2$ to obtain the smoothing signal P, and outputs the obtained smoothing signal P.

More specifically, when the original signal O expressed as $f_1(f)$, the vibration r as $f_2(t)$, the deviation $\varepsilon$ as $\varepsilon = f_1(t) - f_2(t)$, and the foregoing threshold as $\delta$, the first gain $G_1$ and the second gain $G_2$ are calculated as $G_1 = - (-\varepsilon/2\delta +$

0.5)$^2$ + 1, and G$_2$ = - ($\varepsilon/2\delta$ + 0.5)$^2$ + 1, respectively. Assuming that a value $f_1$(T) of the original signal O at a certain time T is a, and that a value $f_2$(T) of the vibration level r at the time T is b, following Equation (4) is calculated to obtain the smoothing signal P.
[Equation 4]

$$P = \delta \cdot (a2 \times G_1 + b2 \times G_2) + \gamma \quad \ldots \quad (4)$$

where a2 = [a-{(a+b)/2-$\delta$/2}]/$\delta$
b2 = [b-{(a+b)/2-$\delta$/2}]/$\delta$
$\gamma$ = (a+b)/2-$\delta$/2

Accordingly, the signal generation unit 311 of the smoothing unit 272 obtains the first gain G$_1$ and the second gain G$_2$ based on the deviation $\varepsilon$ between the original signal O and the vibration level r, and generates the smoothing signal P based on the first gain G$_1$ and the second gain G$_2$ thus obtained.

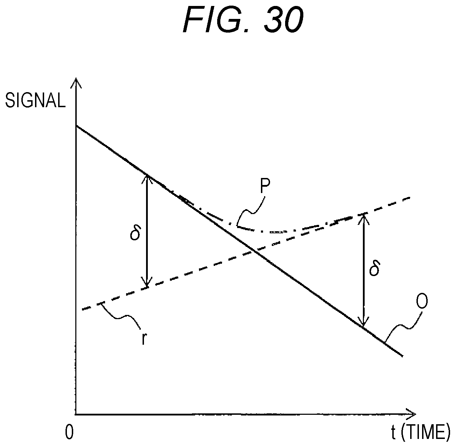

The smoothing signal P obtained in this manner smoothly connects the original signal O and the vibration level r in a range where the absolute value of the deviation $\varepsilon$ between the original signal O and the vibration level r becomes the threshold $\delta$ or smaller as illustrated in Fig. 30.

The smoothing signal P may be constantly generated, or may be generated only when the absolute value of the deviation $\varepsilon$ becomes the threshold $\delta$ or smaller.

In determining whether or not the smoothing signal P is effective, or whether to generate the smoothing signal P, the signal having a smaller value may be subtracted from the signal having a larger value to calculate the deviation $\varepsilon$ . This method eliminates the necessity of determining whether or not the absolute value of the deviation $\varepsilon$ is the threshold $\delta$ or smaller, but only requires determination of whether or not the deviation $\varepsilon$ itself is the threshold $\delta$ or smaller. When either the signal O or the signal r is always subtracted from the other of the signals O and r in this determination, for example, i.e., the order of subtraction is fixed in this determination, the threshold $\delta$ is designated as two numerals having the same numerical part but different signs, such as $\pm$N (N: numeral). In this case, the smoothing signal P is only made effective in the specific range similar to the above range. In addition, a threshold for determining a condition whether the deviation $\varepsilon$ lies within the specific range, and a threshold for determining a condition whether the deviation $\varepsilon$ is out of range may be different numerical values.

As described above, the signal having a larger value of the original signal O and the vibration level r is selected. Then, the first gain is obtained based on the calculation of G$_1$ = - ($-\varepsilon/2\delta$ + 0.5)$^2$ + 1, while the second gain is obtained based on the calculation of G$_2$ = -($\varepsilon/2\delta$ + 0.5)$^2$ + 1. In this case, the first gain G$_1$ and the second gain G$_2$ are obtained only by calculating the deviation $\varepsilon$ in the high-select process for selecting the signal having a larger value by the signal level detection device 14. Accordingly, synthesis of the original signal O and the vibration level r to obtain the smoothing signal P is achievable without the necessity of complicated calculation.

According to the above description, the first gain G$_1$ and the second gain G$_2$ are calculated by using a quadratic function. However, these gains may be calculated by using a trigonometric function. In this case, when the original signal O expressed as $f_1$(t), and the vibration level r expressed as $f_2$(f), the deviation $\varepsilon$ is calculated by $\varepsilon$ = $f_1$(t) - $f_2$(t). In addition, the first gain G$_1$ is calculated by G$_1$ = [cos{($\delta$ + $\varepsilon$)$\pi$/2$\delta$} + 1]$^2$/4, while the second gain G$_2$ is calculated by G$_2$ = [cos{($\delta$ - $\varepsilon$)$\pi$/2$\delta$} + 1]$^2$/4. The first addition signal H$_1$ is calculated by H$_1$ = 1 - a2 $\times$ G$_1$, while the second addition signal H$_2$ is calculated by H$_2$ = 1 - b2 $\times$ G$_2$. The smoothing signal P is calculated by P = $\delta$ $\times$ (H$_1$ + H$_2$) + $\gamma$. By this method, the generated smoothing signal P similarly connects the signal before switching and the signal after switching by a smooth curve at the time of switching from the original signal O to the vibration level r, or from the vibration level r to the original signal O, and reduces a sharp change of the change rate of the signals at the time of switching between the signals O and r. According to the above description, cos functions are used for calculating the first gain G$_1$ and the second gain G$_2$. However, sin functions may be used to define these gains G$_1$ and G$_2$.

According to the above description, the original signal O becomes lower than the vibration level r after crossing the vibration level r in a section for generating the smoothing signal P. In this case, the original signal O is multiplied by the first gain G$_1$, while the vibration level r is multiplied by the second gain G$_2$. The smoothing signal P is thus obtained based on the calculated gains G$_1$ and G$_2$. The equations used herein for calculating the first gain G$_1$ and the second gain G$_2$ are different from each other only in the symbol of the deviation $\varepsilon$ . In this case, the same calculation result of the smoothing signal P is obtained in view of calculation of the first addition signal H$_1$ calculated by multiplying the signal having a larger value of the two signals of the original signal O and the vibration level r by the first gain G$_1$, and the second addition signal H$_2$ calculated by multiplying the signal having a smaller value of the two signals O and r by the second gain G$_2$. Accordingly, the smoothing signal P may be obtained by such calculation that the larger signal is always multiplied by the first gain G$_1$, and that the small signal is always multiplied by the second gain G$_2$.

As described above, the output signal adjustment unit 273 outputs the smoothing signal P as the vibration level rl to reduce a sharp change of the change rate of the vibration level rl at the time of switching of the selected signal when the deviation $\varepsilon$ between the original signal O and the vibration level r becomes the threshold $\delta$ or smaller. The smoothing signal P is obtained based on the foregoing calculation P = $\delta$ x (a2 $\times$ G$_1$ + b2 $\times$ G$_2$) + $\gamma$ as described above. Accordingly, in a state that the original signal O and the vibration level r have the same value and that the deviation $\varepsilon$ is zero, the smoothing signal P is expressed as P = a + 0.25$\delta$ = b + 0.25$\delta$ (a: value of original signal O, b: value of vibration level r) . When the absolute value of the deviation $\varepsilon$ is a value close to zero and equal to or smaller than the threshold $\delta$, the output signal adjustment unit 273 outputs the smoothing signal P as the vibration level rl. However, when the absolute value of the deviation $\varepsilon$ is zero, the vibration level rl becomes the sum of the original signal O or the vibration level r and the threshold $\delta$ multiplied by 0.25. In this case, the value of the smoothing signal P is different from each of the signals O and r regardless of the result of the high selection from the signal O and r. Accordingly, the value of the vibration level rl output from the largest value extraction unit 27 becomes not zero but 0.25$\delta$ even when both the values of the original signal O and the vibration level r are zero. The smoothing unit 272 therefore includes the specific range varying unit 312 which varies the value of the threshold $\delta$.

The specific range varying unit 312 is configured to compare a reference value $\delta$ini of the threshold $\delta$ with an average of the values of the original signal O and the vibration level r, and switch the value of the threshold $\delta$ to the average when the average is smaller than the reference value $\delta$ini. Then, the specific range varying unit 312 inputs the switched threshold $\delta$ to the signal generation unit 311 and the smoothing determination signal generation unit 314. More specifically, the specific range varying unit 312 compares the calculated average of the original signal O and the vibration level r with the reference value $\delta$ini. When it is determined that the average is smaller than the reference value $\delta$ini based on comparison, the value of the threshold $\delta$ is updated to the calculated average. The updated threshold $\delta$ is used for calculation of the smoothing signal P by the signal generation unit 311, and comparison between the absolute value of the deviation $\varepsilon$ and the threshold $\delta$ by the smoothing determination signal generation unit 314. In addition, the threshold $\delta$ includes a minimum $\delta$min larger than zero and smaller than the reference value $\delta$ini. The value of the threshold $\delta$ is clamped to the minimum $\delta$min when the foregoing average is smaller than the minimum $\delta$min.

According to the configuration provided with the specific range varying unit 312 described above, the vibration level rl to be finally output from the signal level detection device 14 does not become a signal having a larger value than the original signal O and the vibration level r even when each of the original signal O and the vibration level r is zero or close to zero.

For example, considered herein is a case that a not-shown control device acquires the vibration level r of the sprung member B of the vehicle, and adjusts damping force of the damper D interposed between the sprung member B and the unsprung member W of the vehicle. When the sprung member B is in a stationary state as a result of a stop of the vehicle, both the original signal O and the vibration level r calculated by the vibration level calculation unit 22 become zero. However, when the vibration level rl output from the signal level detection device 14 has a certain value different from zero even in this condition, the control device is forced to continuously output a control command to a damping force adjustment unit even during the stop of the vehicle. According to the signal level detection device 14 including the specific range varying unit 312, however, the value of the threshold $\delta$ decreases to come close to zero when both the original signal O and the vibration level r have values close to zero. In this case, the value of the smoothing signal P also decreases. When the smoothing signal P is selected and output as the vibration level rl in this condition, the value of the output vibration level rl also becomes a small value close to zero. Accordingly, when both the original signal O and the vibration level r become zero at the time of detection of the sprung member B or the unsprung member W of a stopping vehicle, or at the time of detection of a vibration level of the damper D in case of the signal level detection device 14 applied to a suspension system, this configuration solves a problem of issue of an increasing control command to the damping force adjustment unit of the damper D.

The minimum $\delta$min is given to the threshold $\delta$ based on the point that the smoothing signal P is calculated by a division whose denominator is the threshold $\delta$. When the minimum $\delta$min is set to a value close to zero such as 0.001, the value of the output vibration level rl is set to an extremely small value close to zero in a state that the original signal O and the vibration level r are both zero. This configuration offers an advantageous effect that such a state that both the original signal O and the vibration level r become small values smaller than the threshold $\delta$ is more securely recognizable based on comparison between the foregoing average and the reference value $\delta$ini.

Even when the absolute value of the deviation $\varepsilon$ is the threshold $\delta$ or smaller, the output signal adjustment unit 273 may determine not the smoothing signal P but the signal having a larger value of the original signal O and the vibration level r as the vibration level rl, and output the vibration level rl in a state that the average of the original signal O and the vibration level r is the minimum $\delta$min or smaller. When the original signal O and the vibration level r both become zero, the value of the final vibration level rl may be set to zero.

The smoothing unit 272 according to this embodiment includes the specific range varying unit 312 to vary the threshold $\delta$. In this case, the varied threshold $\delta$ is processed by the sharp change reduction unit 313, and then is input to the signal generation unit 311 and the smoothing determination signal generation unit 314. According to this embodiment, the sharp change reduction unit 313 is constituted by a low-pass filter which filters the threshold $\delta$ to delay a rapid change of the threshold $\delta$ and reduce a sharp change of the threshold $\delta$. In other words, a sharp change of the specific range is reduced by the processing of the sharp change reduction unit 313. When the original signal O and the vibration level r happen to become zero or values close to zero during vibrational changes of both the signals O and r at a high frequency, the threshold $\delta$ is switched to the average of both the signals O and r. In this case, the threshold $\delta$ does not become an excessively small value as a result of the processing of the sharp change reduction unit 313. Accordingly, even when the original signal O and the vibration level r cross each other around zero, the output signal O is sufficiently smoothed by the smoothing signal P, wherefore a sharp change of the output signal O decreases even in this condition. This reduction of the sharp change of the specific range prevents excessive decrease in the specific range during a vibrational change of both the original signal O and the vibration level r at a high frequency. In this case, the smoothing signal P is determined as the vibration level rl even when the original signal O and the vibration level cross each other around zero. Accordingly, a sharp change of the vibration level rl decreases. On the other hand, when both the original signal O and the vibration level r gradually changes to zero or values around zero, a variable frequency of the specific range is also low. Accordingly, the threshold $\delta$ gradually decreases even after processing by the sharp change reduction unit 313. This decrease in the threshold $\delta$ lowers the value of the smoothing signal P. Accordingly, the vibration level rl finally output from the signal level detection device 14 gradually approaches zero or a value around zero in accordance with a change of the selected signal of the original signal O and the vibration level r. More specifically, when both the original signal O and the vibration level r gradually change to zero or values close to zero, the variable frequency of the specific range is also low. In this case, the specific range gradually decreases even after processing by the sharp change reduction unit 313. The deviation $\varepsilon$ decreases in accordance with decrease in the specific range, wherefore the value of the smoothing signal P also lowers. As a result, the vibration level rl gradually approaches zero or a value around zero in accordance with a change of the selected signal of the original signal O and the vibration level r. Accordingly, in a state requiring smoothing during traveling of a vehicle by a control device which includes the signal level detection device 14 to control the damp D described above, the vibration level rl finally output is smoothed even when the original signal O and the vibration level r are vibrational and happen to become zero or values close to zero. On the other hand, smoothing is not performed in a state not requiring smoothing, such as a stop of the vehicle. Accordingly, the signal level detection device 14 is an optimum device for the control device of the damper D.

The smoothing determination signal generation unit 314 calculates the deviation $\varepsilon$ between the original signal O and the vibration level r, compares the calculated deviation $\varepsilon$ with the threshold $\delta$ processed by the sharp change reduction unit 313, and generates the smoothing determination signal Z. More specifically, the smoothing determination signal generation unit 314 outputs the smoothing determination signal Z having a value based on which the output signal adjustment unit 273 determines adoption of the smoothing signal P when the absolute value of the deviation $\varepsilon$ is the threshold $\delta$ or smaller. On the other hand, the smoothing determination signal generation unit 314 outputs the smoothing determination signal Z having a value based on which the output signal adjustment unit 273 determines adoption of the largest signal Ma or a smallest signal Mi when the absolute value of the deviation $\varepsilon$ exceeds the threshold $\delta$. As described above, the smoothing determination signal generation unit 314 may be included in the output signal adjustment unit 273, or may be included in the normal processing unit 271.

The smoothing unit 272 constantly generates the smoothing signal P, while the smoothing determination signal generation unit 314 generates the smoothing determination signal Z. The output signal adjustment unit 273 finally determines whether or not the smoothing signal P is effective. However, the smoothing signal P may be generated only in a state that the absolute value of the deviation $\varepsilon$ lies within the specific range of the threshold $\delta$ or smaller.

The smoothing unit 272 described above generates the smoothing signal P by synthesizing the original signal O and the vibration level r based on the deviation $\varepsilon$. However, the smoothing unit 272 in another example may obtain the smoothing signal P by adding an addition value to the selected signal having the largest value of the original signal O and the vibration level r.

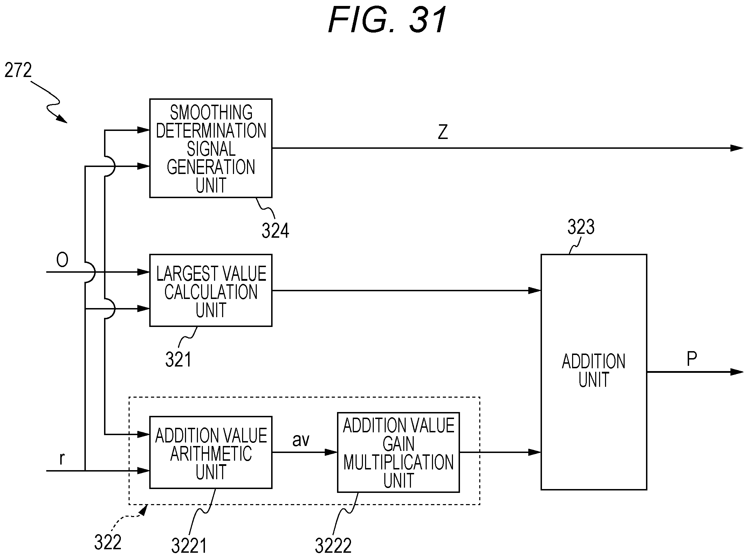

As illustrated in a second configuration example in Fig. 31, the smoothing unit 272 in this example includes a largest value calculation unit 321, an addition value calculation unit 322, an addition unit 323, and a smoothing determination signal generation unit 324. When receiving the two signals O and r, the largest value calculation unit 321 compares both the signals O and r, selects the signal having the largest value, and outputs the selected signal to perform the high-select process.

An addition value calculation unit 322 calculates the deviation $\varepsilon$ between the input original signal O and vibration level r, and obtains an addition value av added to the signal selected from the signals O and r based on the deviation $\varepsilon$. The addition unit 323 adds the addition value av to the signal selected by the largest value calculation unit 321 to obtain the smoothing signal P.

The addition value calculation unit 322 includes an addition value arithmetic unit 3221 which calculates the addition value av added to the signal selected based on the obtained deviation $\varepsilon$, and an addition value gain multiplication unit 3222 which multiplies the addition value av by an addition value gain to function as an addition value switching unit.

The addition value arithmetic unit 3221 calculates the addition value av from the deviation $\varepsilon$. More specifically, for smoothly connecting the original signal O and the vibration level r by the smoothing signal P, the smoothing signal P is configured to draw a curved line which comes in contact with the original signal O or the vibration level r when the absolute value of the deviation $\varepsilon$ is equivalent to the threshold $\delta$, and produces the maximum difference between the smoothing signal P and both the original signal O and the vibration level r when the deviation $\varepsilon$ is zero. More specifically, the addition value av is expressed by a function which draws a curved line satisfying conditions that the addition value av becomes the largest when the deviation $\varepsilon$ becomes zero, and that the addition value av and a differential value of the addition value av become zero when the absolute value of the deviation $\varepsilon$ is equivalent to the threshold $\delta$.

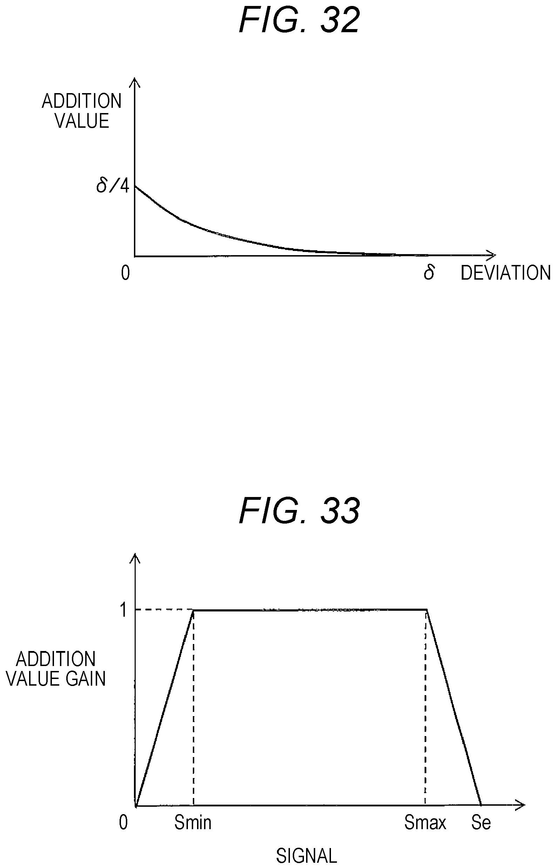

In this case, the addition value av is expressed as av $= (\delta - |\varepsilon|)^2/4\delta$ (where $0 \leq |\varepsilon| \leq \delta$). The addition value av, which is obtainable by easy calculation as described above, may be also obtained by mapping operation based on a mapped relationship between the deviation $\varepsilon$ and the addition value av as illustrated in Fig. 32. Particularly when the smoothing signal P is difficult to express by using an easy function, the relationship between the deviation $\varepsilon$ and the addition value av may be mapped to calculate the addition av based on mapping operation. When the absolute value of the deviation $\varepsilon$ exceeds the threshold $\delta$, the addition value av becomes zero. However, when the addition value av is obtained by calculating the foregoing equation, the addition value av does not become zero. Accordingly, when the absolute value of the deviation $\varepsilon$ exceeds the threshold $\delta$, the addition value av is set to zero regardless of the calculation result of the foregoing equation. For setting the addition value av to zero, zero is given to the addition value av without executing calculation of the foregoing equation when the absolute value of the deviation $\varepsilon$ exceeds the threshold $\delta$ as a result of comparison between the absolute value of the deviation $\varepsilon$ and the threshold $\delta$. Alternatively, the result of calculation of the foregoing calculation is multiplied by an addition value gain to set the addition value av to zero.

A differential value av' of the addition value expressed as av' $= (|\varepsilon| - \delta)/2\delta$ (where $0 \leq |\varepsilon| \leq \delta$) becomes zero when $|\varepsilon| = \delta$. In this case, the smoothing signal P smoothly connecting the original signal O and the vibration level r is obtained when the addition value av is calculated by using a function or a map created under a condition requiring smooth connection between a point $(0, \delta/4)$ and a point $(\delta, 0)$ in Fig. 32. Accordingly, the function for obtaining the addition value av is not limited only to the function described above.

Subsequently, the addition value gain multiplication unit 3222 functioning as an addition value varying unit calculates a value multiplied by an addition value gain Kav variable in accordance with signal values of the original signal O and the vibration level r, and outputs the resultant value. For example, the addition value gain multiplication unit 3222 calculates the addition value gain Kav based on the value of the signal selected from the original signal O and the vibration level r by using a map which has a vertical axis representing the addition value gain, and a horizontal axis representing the signals O and r as illustrated in Fig. 33. As illustrated in the map, the addition value gain Kav is set to a value smaller than 1 when the value of the signal selected from the signals O and r is smaller than a signal minimum threshold Smin and exceeds a maximum threshold Smax. On the other hand, the addition value gain Kav is set to 1 in the rest of the signal range. More specifically, the addition value gain Kav proportionally increases from zero to 1 in accordance with a change of the value of the signal selected from the signals O and r from zero to the signal minimum threshold Smin, and proportionally decreases from 1 to zero in accordance with increase in the value of the selected signal of the signals O and r to a limit value Se in excess of the signal maximum threshold Smax. The signal value of the signal minimum threshold Smin is set to a small positive value around zero, while the signal maximum threshold Smax is set to a value around an output maximum allowed to be output from the signal processing device 14. The limit value Se may be an arbitrary value. In excess of the limit value Se, the addition value gain multiplied by the addition value av becomes zero.

After the addition value gain multiplication unit 3222 multiplies the addition value av by the addition value gain Kav, the addition unit 323 adds the larger value of the signal of the signals O and r to the multiplied value and outputs the resultant value as the smoothing signal P. When the absolute value of the deviation $\varepsilon$ exceeds the threshold $\delta$, the addition value av is set to zero. In this case, the addition value av multiplied by the addition value gain Kav becomes zero regardless of the value of the addition value gain Kav. Accordingly, the result of calculation of the addition unit 323 becomes the signal having a larger value of the original signal O and the vibration level r.

Accordingly, when the absolute value of the deviation $\varepsilon$ exceeds the threshold $\delta$, the signal level detection device 14 always generates the signal having a larger value of the original signal O and the vibration level r as the smoothing signal P. On the other hand, when the absolute value of the deviation $\varepsilon$ is the threshold $\delta$ or smaller, the addition value av has a value other than zero. Furthermore, when the original signal O is zero or does not exceed the limit value Se, the addition value gain Kav is not zero. In this case, the addition value av multiplied by the addition value gain Kav becomes a value other than zero. Accordingly, this value is added to the signal having a larger value of the original signal and the vibration level r to generate the smoothing signal P.

The smoothing determination signal generation unit 324 obtains the deviation $\varepsilon$ between the original signal O and the vibration level r, compares the obtained deviation $\varepsilon$ with the threshold $\delta$, and generates eth smoothing determination signal Z similarly to the smoothing determination signal generation unit 314 described above. More specifically, when the absolute value of the deviation $\varepsilon$ is the threshold $\delta$ or smaller, the smoothing determination signal generation unit 324 outputs the smoothing determination signal Z based on which the output signal adjustment unit 273 determines adoption of the smoothing signal P. On the other hand, when the absolute value of the deviation $\varepsilon$ exceeds the threshold

δ, the smoothing determination signal generation unit 324 outputs the smoothing determination signal Z having a value based on which the output signal adjustment unit 273 determines whether or not the largest signal Ma is adoptable. The smoothing determination signal generation unit 324 may be included in the output signal adjustment unit 273, or in the normal processing unit 271.

As described above, the smoothing unit 272 constantly generates the smoothing signal P. When the absolute value of the deviation ε is the threshold δ or smaller, the output signal adjustment unit 273 adopts the smoothing signal P as the vibration level rl. This configuration decreases a sharp change of the change rate of signals at the time of switching between the signals O and r. The smoothing unit 272 calculates the smoothing signal P by adding the addition value av to the signal selected by high-select, and sets the addition value av to zero when the deviation ε does not lie within the specific range . The smoothing signal P calculated by adding the addition value av to the signal selected from the signals O and r is always output as the vibration level rl. In this case, a sharp change of the change rate of the signals at the time of switching between the signals O and r decreases. Accordingly, the smoothing signal P calculated based on the addition value av may be output as the vibration level rl without using the smoothing signal generation unit 324, the normal processing unit 271, and the output signal adjustment unit 273. In addition, the smoothing unit 272 may calculate only the addition value av while eliminating the largest value calculation unit 321 and the smoothing signal generation unit 324, and output the calculated addition value av as the smoothing signal P. In this case, the output signal adjustment unit 273 may add a signal output from the normal processing unit 271 to the addition value av to output the result as the vibration level rl.

The smoothing unit 272 further includes the addition value gain multiplication unit 3222 functioning as an addition value varying unit. The addition value gain multiplication unit 3222 is configured to reduce the addition value av by multiplying the addition value av by the addition value gain Kav smaller than 1 when the signal selected from the signals O and r is smaller than the signal minimum threshold Smin or exceeds the signal maximum threshold Smax.

When the signal selected from the signals O and r is smaller than the signal minimum threshold Smin, the addition value gain multiplication unit 3222 multiplies the addition value av by an addition value gain which decreases the addition value av to a value smaller than the addition value calculated by the addition value calculation unit 3221. In this case, the output smoothing signal P does not become greatly different from the signal selected from the signals O and r even when the addition value av is superimposed on the selected signal which is close to zero. Accordingly, when the signal level detection device 14 including the smoothing unit 272 having the second configuration example illustrated in Fig. 31 is applied to a control device which controls damping force of the damper D, the problem of issue of an increasing control command to a damping force adjustment unit of the damper D during a stop of a vehicle does not arise.

Moreover, the addition value gain multiplication unit 3222 multiplies the addition value av by an addition value gain which decreases the value of the addition value av to a value smaller than the addition value av calculated by the addition value calculation unit 3221 when the signal selected from the signals O and r exceeds the signal maximum threshold Smax. In this case, the smoothing unit 272 reduces the addition value av by using the addition value gain multiplication unit 322 when the signal selected from the signals O and r becomes a value close to the maximum of the signal allowed to be output from the signal level detection device 14. Accordingly, a limiter function for clamping the smoothing signal P to the output maximum of the signal processing device 1 is realizable even when the signal level detection device 14 outputs the smoothing signal P. Whether the addition value gain multiplication unit 322 is provided or eliminated may be arbitrarily determined.

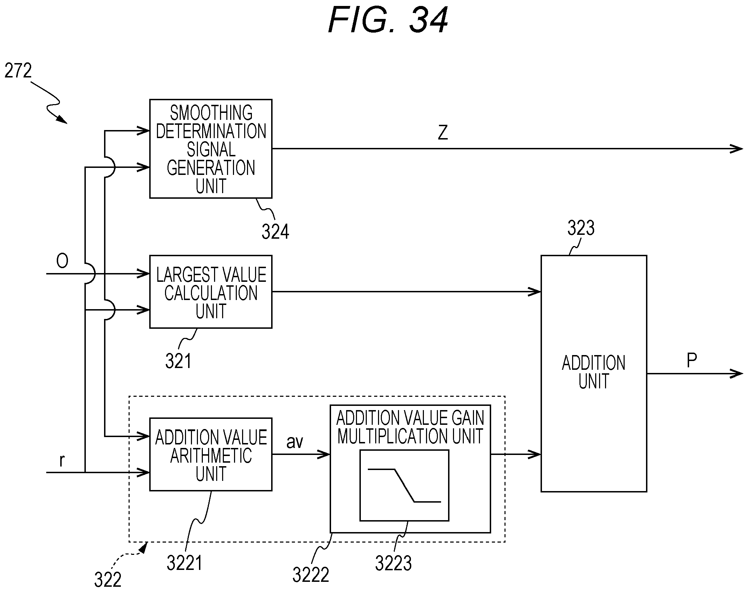

As illustrated in a third configuration example in Fig. 34, the smoothing unit 272 may include a gain sharp change reduction unit 3223 which reduces a sharp change of the addition value gain Kav calculated by the addition value gain multiplication unit 3222. According to this example, the gain sharp change reduction unit 3223 is constituted by a low-pass filter which reduces a sharp change of the addition value gain Kav by performing a low-pass filtering process for the addition value gain Kav. When the signal selected from the signals O and r happens to become zero or a value close to zero during a vibrational change of the selected signal at a high frequency, the value of the addition value gain Kav changes. However, a sharp change of the value of the addition value gain Kav is prevented by the low-pass filtering process. Accordingly, a sharp change of the vibration level rl decreases at the time of switching between the original signal O and the vibration level r as a result of execution of the smoothing process. On the other hand, when the original signal O and the vibration level r both gradually change to zero or values close to zero, the change rate of the addition value gain Kav is also small. In this case, the addition value gain Kav gradually lowers even after processing by the gain sharp change reduction unit 3223. The reduction of the addition value gain Kav lowers the value of the smoothing signal P, wherefore the smoothing signal P also gradually approaches zero or a value close to zero in accordance with a change of the signal selected by high select. Accordingly, in a state requiring smoothing by the above suspension system including the signal level detection device 14 during traveling of a vehicle, smoothing is executed even when both the original signal O and the vibration level r happen to become zero or values close to zero by vibration of both the signals at a high frequency. On the other hand, smoothing is not performed when smoothing is unnecessary at a stop of the vehicle, for example. Accordingly, the signal level detection device 14 is an optimal device for a signal processing device of a suspension system of a vehicle.

When the largest value extraction unit 27 extracts the largest value of the original signal O and the vibration level r, the signal level detection device 14 according to the fifth embodiment outputs the smoothing signal P which smoothly connects the original signal O and the vibration level r at the time of switching of the extracted signal from the original signal O to the vibration level r, or at the time of switching of the extracted signal from the vibration level r to the original signal O, and determines the output smoothing signal P as the vibration level rl. The frequency varying unit 4 varies the cut-off frequency $\omega c$ based on the vibration level rl obtained in the manner described above. The vibration level rl is processed by the variable low-pass filter 3 similarly to other embodiments.

Accordingly, the signal level detection device 12 of the fifth embodiment reduces a delay of a rise of the obtained signal level from a rise of the actual signal level, and also detects the signal level with high accuracy. Even in case of an extremely low signal level, reliability of the signal level to be output improves. Accordingly, control results thus obtained become preferable. In addition, following advantageous effects are realizable.

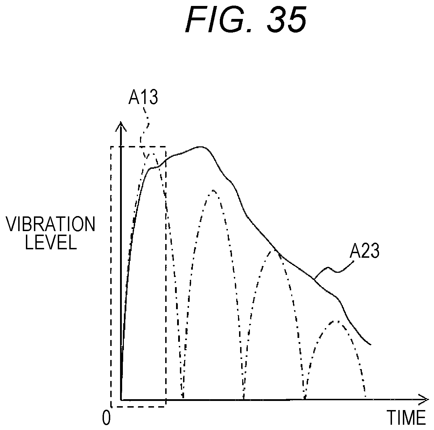

As illustrated in Fig. 35, the signal level detection device 14 according to the fifth embodiment is capable of outputting the vibration level rl indicated by a line A23, which rises with high followability for a change of a sprung speed indicated by a line A13 while producing a slight delay in an area surrounded by a broken line where the sprung speed sharply rises. Moreover, the signal level detection device 14 is capable of reducing a sharp change of the change rate of the vibration level rl at connection of signals when the largest value extraction unit 27 switches the original signal O multiplied by the first proportional gain to the vibration level r calculated by the signal level calculation unit 22. Furthermore, the change rate of the vibration level rl also decreases at the time of switching from the vibration level r to the original signal O, wherefore a ripple of the vibration level rl decreases.

The largest value extraction unit 27 of the signal level detection device 14 according to the fifth embodiment may be employed instead of the largest value extraction unit 23 of each of the signal level detection device 11 according to the second embodiment, the signal level detection device 12 according to the third embodiment, and the signal level detection device 13 according to the fourth embodiment. This configuration reduces a sharp change of the change rate of the vibration level rl at connection of signals when the largest value extraction unit 27 switches the original signal O to the vibration level r calculated by the signal level calculation unit 22 and outputs the vibration level r. Furthermore, the change rate of the vibration level rl also decreases at the time of switching from the vibration level r to the original signal O, wherefore a ripple of the vibration level rl decreases.

The signal level detection device 14 according to the fifth embodiment includes the first gain multiplication unit 26 to multiply the original signal O by a gain smaller than 1. However, the first gain multiplication unit 26 may be eliminated. When the first gain multiplication unit 26 is eliminated, the vibration level rl easily follows the actual vibration level in an initial stage of a rise of the actual vibration level. Accordingly, the signal level detection device 14 having this configuration is more suitable for a control device required to be highly responsive.

<Sixth Embodiment>

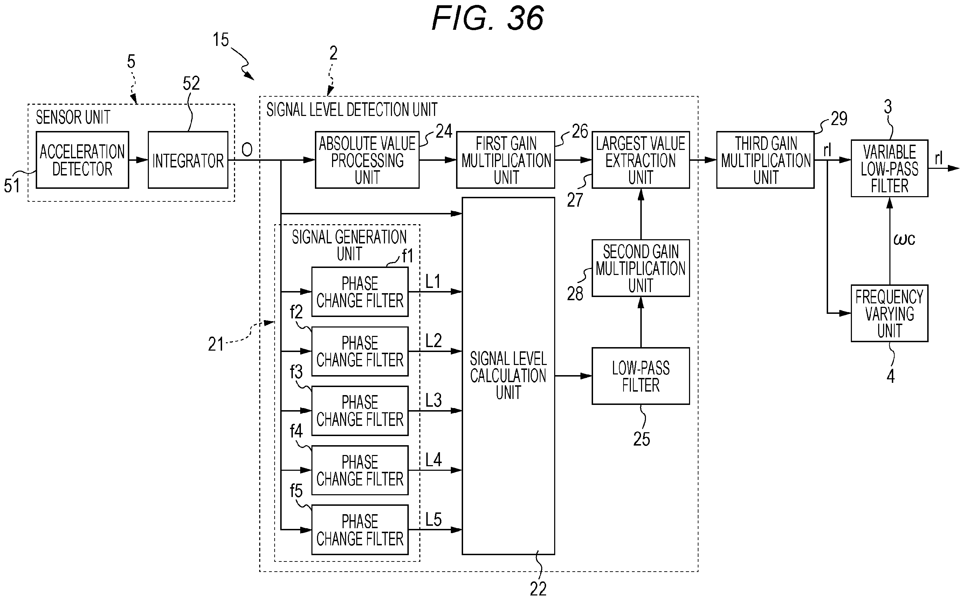

Finally discussed is a signal level detection device 15 according to a sixth embodiment illustrated in Fig. 36. The signal level detection device 15 according to the sixth embodiment includes a second gain multiplication unit 28 which multiplies the vibration level r input to the largest value extraction unit 27 by a second proportional gain on the downstream side of the low-pass filter 25, and a third gain multiplication unit 29 which multiplies the vibration level rl output from the largest value extraction unit 27 by a third proportional gain on the downstream side of the largest value extraction unit 27, in addition to the configuration of the signal level detection device 13 of the fourth embodiment.

In other words, the signal level detection device 15 according to the sixth embodiment multiplies the original signal O by the first proportional gain, multiplies the vibration level r obtained by the signal level calculation unit 22 by the second proportional gain, and multiplies the vibration level rl output from the largest value extraction unit 27 by the third proportional gain.

Each of the first proportional gain, the second proportional gain, and the third proportional gain may be set to an arbitrary value. The first proportional gain is a gain multiplied by the original signal O. The original signal O follows an actual vibration level without a delay at the time of a sharp rise of the actual vibration level. Accordingly, when the first proportional gain is set to 1, the original signal O selected by the largest value extraction unit 27 and output as the vibration level rl is not delayed from the actual vibration level. When the first proportional gain is set to a value smaller than 1 as in the case of the first gain multiplication unit 26 of the signal level detection device 13 according to the fourth embodiment, the original signal O selected by the largest value extraction unit 27 and output as the vibration level rl is delayed from the actual vibration level. However, a sharp change of the value of the signal level rl at the time of switching from the original signal O selected by the largest value extraction unit 27 to the vibration level r decreases.

The second proportional gain is a gain multiplied by the vibration level r. A high-frequency ripple is removed from the vibration level r by the low-pass filter 25. However, the vibration level r is delayed from the actual vibration level. This delay of the vibration level rl from the actual vibration level is reduced by setting the second proportional gain to a value exceeding 1 when the vibration level r is selected and output as the vibration level rl by the largest value extraction unit 27.

The third proportional gain is a gain multiplied by the vibration level rl output from the largest value extraction unit 27. When one or both of the first proportional gain and the second proportional gain are set to values exceeding 1, the followability of the vibration level rl output from the largest value extraction unit 27 for a sharp change of the actual vibration level improves. However, an amplification factor in this case exceeds 1, wherefore the value of the vibration level rl overshoots the actual vibration level. Accordingly, the third proportional gain is set to a value smaller than 1 to avoid this overshoot when one or both of the first proportional gain and the second proportional gain are set to values exceeding 1.

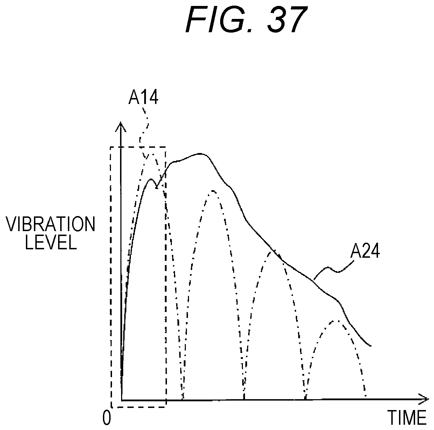

When the first proportional gain, the second proportional gain, and the third proportional gain are set to 1, 1.1, and 0.91, respectively, for example, the vibration level rl output from the signal level detection device 15 changes as indicated by a line A24 in Fig. 37 for a change of the actual vibration level as indicated by a line A14 in Fig. 37. When the actual level sharply rises, the original signal O is selected and output by the largest value extraction unit 27. In this case, the vibration level rl corresponding to the original signal O multiplied by 0.91 is output from the third gain multiplication unit 29. After an elapse of time, the vibration level r multiplied by 1.1 by the second gain multiplication unit exceeds the value of the original signal O. In this case, the largest value extraction unit 27 outputs the vibration level rl corresponding to the vibration level r multiplied by 1.1. However, the vibration level rl is further multiplied by 0.91 by the third gain multiplication unit 29. As a result, the vibration level rl to be output becomes substantially equivalent to the vibration level r.

As described above, the second proportional gain is set to a value exceeding 1, while the second proportional gain and third proportional gain are set to values each of which becomes substantially 1 when multiplied by the opposite value. In this case, signal switching from the original signal O to the vibration level r advances in time. Accordingly, accurate detection of a vibration level, and reduction of overshooting of the detected vibration level rl for the actual vibration level are both achievable.

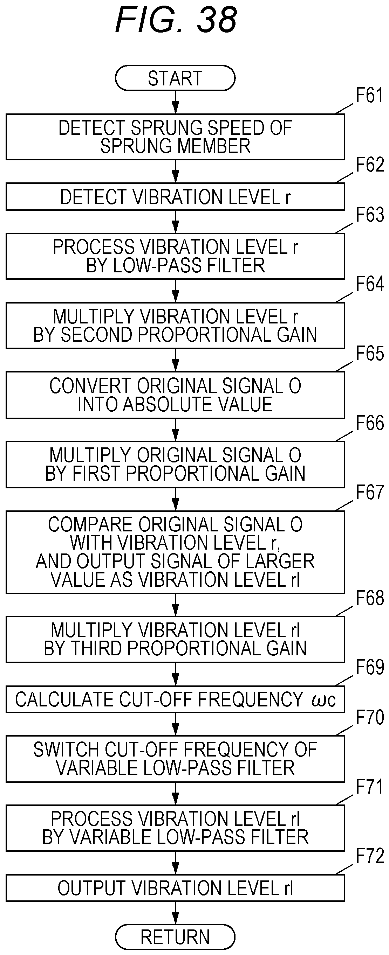

When the vibration level r of the sprung member B as a signal level is obtained from a sprung speed, the signal level detection device 15 performs specific processes shown in Fig. 38, for example. Initially, the signal level detection device 15 detects a sprung speed of the sprung member B by using the sensor unit 5 (step F61). The signal level detection device 15 determines the sprung speed as the original signal O, and detects the vibration level r (step F62). Subsequently, the signal level detection device 15 filters the obtained vibration level r by using the low-pass filter 25 (step F63) . The signal level detection device 15 further multiplies the vibration level r by the second proportional gain (step F64). Thereafter, the signal level detection device 15 converts the original signal O into an absolute value (step F65) . The signal level detection device 15 multiplies the original signal O converted into an absolute value by the first proportional gain (step F66) . The signal level detection device 15 compares the original signal O multiplied by the first proportional gain with the vibration level r multiplied by the second proportional gain, and outputs the signal having a larger value as the vibration level rl (step F67). The signal level detection device 15 further multiplies the vibration level rl obtained in step F67 by the third proportional gain (step F68). Subsequently, the signal level detection device 15 calculates the cut-off frequency $\omega c$ of the variable low-pass filter 3 from the vibration level rl multiplied by the third proportional gain (step F69) . Thereafter, the cut-off frequency of the variable low-pass filter 3 is switched to the cut-off frequency $\omega c$ obtained in step F69 (step F70). The signal level detection device 15 further processes the vibration level rl by using the variable low-pass filter 3 (step F71) . Finally, the vibration level detection device 15 outputs the vibration level rl filtered by the variable low-pass filter 3 (step F72). The signal level detection device 15 successively executes a series of the foregoing processing procedures to repeatedly obtain and output the vibration level rl.

Accordingly, the signal level detection device 15 of the sixth embodiment is capable of reducing a delay of a rise of an obtained signal level from a rise of an actual signal level, and detecting the signal level with high accuracy. Even when the signal level is extremely low, reliability of the signal level to be output improves. Accordingly, control results thus obtained become preferable. In addition, following advantageous effects are realizable.

The original signal O is multiplied by the first proportional gain, while the vibration level r is multiplied by the second proportional gain. The vibration level rl is extracted by the largest value extraction unit 27. The vibration level rl extracted by the largest value extraction unit 27 is further multiplied by the third proportional gain. In this case, the signal level detection device 15 obtains a signal level having high followability at the time of a sharp rise of the actual signal level. Accordingly, the switching timing from the original signal O to the accurate signal level obtained by the signal level calculation unit 22 is controllable. In addition, overshooting of the signal level for the actual signal level is avoidable.

The second proportional gain is set to a value exceeding 1, while the second proportional gain and the third proportional gain are set to values each of which become substantially 1 when multiplied by the opposite value. In this case, signal switching from the original signal O to the signal level advances in time. Accordingly, accurate detection of a signal level, and secure prevention of overshooting of the detected signal level for the actual signal level are both achievable.

According to the embodiments described above, a specific example of a hardware resource of each of the signal level detection devices 1, 11, 12, 13, 14, and 15 described above includes, although not illustrated, an A/D converter which acquires signal output from the sensor unit 5, a storage device such as a read only memory (ROM) storing programs used for processing necessary for detection of the signal level r, a calculation device such as a central processing unit (CPU) which executes processes based on the programs described above, and a storage device such as a random access memory (RAM) providing a storage area for the CPU. The CPU executes the programs described above to realize operations of the respective foregoing units.

According to the above description, a sprung sped of the sprung member B of the vehicle is input to each of the signal level detection devices 1, 11, 12, 13, 14, and 15 as the original signal O to obtain a signal level. The obtained signal level becomes the vibration level r or rl based on the scale of the speed of the sprung member B. Each of the signal level detection devices 1, 11, 12, 13, 14, and 15 is a device which processes a signal and obtains a vibration level, and therefore is applicable to detection of a magnitude of vibration other than the vibration level r and rl. Accordingly, the signal level detection device and the signal level detection method are applicable to vehicles other than cars, such as railroad vehicles, and further to detection of vibration levels of buildings. Furthermore, the signal level detection device and the signal level detection method may process various types of signals output from sensors or the like to obtain signal levels.

Description of the embodiments according to the present invention now ends. The scope of the present invention is not limited to details depicted or described herein.

In addition, the signal level detection device and the signal level detection method are applicable to detection of signal levels of vehicles and buildings, for example.

The present application claims priority to Japanese Patent Application No. 2014-182045 filed in Japan Patent Office on September 8, 2014, the entirety of which is hereby incorporated by reference.

**Claims**

1. A signal level detection device comprising:

   a signal level detection unit that obtains a signal level indicating a magnitude of a signal;
   a variable low-pass filter that has a variable cut-off frequency, and filters the signal level obtained by the signal level detection unit; and
   a frequency varying unit that varies the cut-off frequency of the variable low-pass filter based on the signal level or information referred to for estimating the signal level.

2. The signal level detection device according to claim 1, wherein
   the frequency varying unit increases the cut-off frequency as the signal level becomes higher, or as the signal level contained in the information referred to for estimating the signal level becomes higher.

3. The signal level detection device according to claim 1, wherein
   the signal level detection unit includes a signal level calculation unit that receives input of an original signal indicating a signal of an origin, and obtains a signal level based on the original signal.

4. The signal level detection device according to claim 3, wherein
   the signal level detection unit includes a signal generation unit that generates two or more level calculation signals having different phases by utilizing the input original signal, and
   the signal level calculation unit obtains the signal level based on the original signal and the two or more level calculation signals.

5. The signal level detection device according to claim 3, wherein
   the signal level calculation unit obtains the signal level based on the original signal, and on one or both of an integrated value and a differential value of the original signal.

6. The signal level detection device according to claim 4, wherein
   the signal level detection unit includes a largest value extraction unit that selects the signal having a larger value of the original signal and the signal level obtained by the signal level calculation unit, and outputs the selected signal as the signal level.

7. The signal level detection device according to claim 4, further comprising
   a low-pass filter that filters the signal level obtained by the signal level calculation unit, wherein
   a cut-off frequency of the low-pass filter is set to a frequency between a minimum and a maximum of the cut-off frequency of the variable low-pass filter.

8. The signal level detection device according to claim 6, further comprising
a low-pass filter that filters the signal level obtained by the signal level calculation unit, wherein
a cut-off frequency of the low-pass filter is set to a frequency between a minimum and a maximum of the cut-off frequency of the variable low-pass filter.

9. The signal level detection device according to claim 6, further comprising
a first gain multiplication unit that multiplies the original signal input to the largest value extraction unit by a first proportional gain.

10. The signal level detection device according to claim 9, further comprising:

a second gain multiplication unit that performs multiplication by a second proportional gain obtained by the signal level calculation unit; and
a third gain multiplication unit that multiplies the signal level output from the largest value extraction unit by a third proportional gain.

11. The signal level detection device according to claim 10, wherein
the second proportional gain is set to a value exceeding 1, and
the second proportional gain and the third proportional gain are set to values each of which becomes substantially 1 when multiplied by the opposite value.

12. The signal level detection device according to claim 6, wherein
the largest value extraction unit outputs a smoothing signal that reduces a change rate of the original signal and the signal level at a time of switching of an output signal from the original signal to the signal level, and from the signal level to the original signal.

13. The signal level detection device according to claim 1, wherein
the signal is a signal indicating a magnitude of unsprung vibration of a vehicle, and
the frequency varying unit varies the cut-off frequency of the low-pass filter based on vibration information on the unsprung vibration, a vehicle speed, or a wheel rotational speed of the vehicle, each of which information and speeds corresponds to information referred to for estimating the signal level.

14. The signal level detection device according to claim 1, wherein
the signal is a signal indicating a magnitude of sprung vibration of a vehicle, and
the frequency varying unit varies the cut-off frequency of the low-pas filter based on vibration information on the sprung vibration or vibration information on suspension of the vehicle, each of which information corresponds to information referred to for estimating the signal level,.

15. A signal level detection method comprising:

a signal level detection step of obtaining a signal level indicating a magnitude of a signal;
a frequency varying step of varying a cut-off frequency of a variable low-pass filter based on the signal level or information referred to for estimating the signal level; and
a filtering step of filtering the signal level obtained in the signal level detection step by using the variable low-pass filter.

## FIG. 1

# FIG. 2

# FIG. 3

EP 3 192 681 A1

FIG. 4

EP 3 192 681 A1

FIG. 5

FIG. 6

*FIG. 7*

FIG. 8

# FIG. 9

2

O

| FILTER | 6
| SIGNAL LEVEL CALCULATION UNIT | 22

r

| INTEGRATOR | 201

| CORRECTION UNIT | 202

# FIG. 10

INTEGRATED VALUE
(DIFFERENTIAL VALUE)

SYNTHETIC VECTOR

0

ORIGINAL SIGNAL

# FIG. 11

*FIG. 12*

# FIG. 13

```
                    ┌──────────────┐
                    │    START     │
                    └──────┬───────┘
                           │                              F1
            ┌──────────────▼──────────────────┐
            │     DETECT SPRUNG SPEED OF       │
            │        SPRUNG MEMBER             │
            └──────────────┬──────────────────┘
                           │                              F2
            ┌──────────────▼──────────────────┐
            │      DETECT VIBRATION LEVEL r    │
            └──────────────┬──────────────────┘
                           │                              F3
            ┌──────────────▼──────────────────┐
            │  CALCULATE CUT-OFF FREQUENCY ωc  │
            └──────────────┬──────────────────┘
                           │                              F4
            ┌──────────────▼──────────────────┐
            │    SWITCH CUT-OFF FREQUENCY OF   │
            │     VARIABLE LOW-PASS FILTER     │
            └──────────────┬──────────────────┘
                           │                              F5
            ┌──────────────▼──────────────────┐
            │     PROCESS VIBRATION LEVEL r    │
            │    BY VARIABLE LOW-PASS FILTER   │
            └──────────────┬──────────────────┘
                           │                              F6
            ┌──────────────▼──────────────────┐
            │      OUTPUT VIBRATION LEVEL r    │
            └──────────────┬──────────────────┘
                           │
                    ┌──────▼───────┐
                    │    RETURN    │
                    └──────────────┘
```

# FIG. 14

# FIG. 15

EP 3 192 681 A1

# FIG. 16

START

DETECT SPRUNG SPEED OF
SPRUNG MEMBER — F11

DETECT VIBRATION LEVEL r — F12

CONVERT ORIGINAL SIGNAL O
INTO ABSOLUTE VALUE — F13

COMPARE ORIGINAL SIGNAL O
WITH VIBRATION LEVEL r,
AND OUTPUT SIGNAL OF LARGER
VALUE AS VIBRATION LEVEL rl — F14

CALCULATE CUT-OFF FREQUENCY $\omega c$ — F15

SWITCH CUT-OFF FREQUENCY OF
VARIABLE LOW-PASS FILTER — F16

PROCESS VIBRATION LEVEL rl
BY VARIABLE LOW-PASS FILTER — F17

OUTPUT VIBRATION LEVEL rl — F18

RETURN

# FIG. 17

FIG. 18

## FIG. 19

EP 3 192 681 A1

# FIG. 20

START

DETECT SPRUNG SPEED OF
SPRUNG MEMBER — F21

DETECT VIBRATION LEVEL r — F22

PROCESS VIBRATION LEVEL r
BY LOW-PASS FILTER — F23

CONVERT ORIGINAL SIGNAL O
INTO ABSOLUTE VALUE — F24

COMPARE ORIGINAL SIGNAL O
WITH VIBRATION LEVEL r,
AND OUTPUT SIGNAL OF LARGER
VALUE AS VIBRATION LEVEL rl — F25

CALCULATE CUT-OFF FREQUENCY $\omega c$ — F26

SWITCH CUT-OFF FREQUENCY OF
VARIABLE LOW-PASS FILTER — F27

PROCESS VIBRATION LEVEL rl
BY VARIABLE LOW-PASS FILTER — F28

OUTPUT VIBRATION LEVEL rl — F29

RETURN

FIG. 21

EP 3 192 681 A1

# FIG. 22

```
                    ┌─────────────┐
                    │    START    │
                    └─────────────┘
                           │
                           ▼                              F31
        ┌──────────────────────────────────┐
        │      DETECT SPRUNG SPEED OF       │
        │          SPRUNG MEMBER            │
        └──────────────────────────────────┘
                           │                              F32
                           ▼
        ┌──────────────────────────────────┐
        │      DETECT VIBRATION LEVEL r     │
        └──────────────────────────────────┘
                           │                              F33
                           ▼
        ┌──────────────────────────────────┐
        │      PROCESS VIBRATION LEVEL r    │
        │         BY LOW-PASS FILTER        │
        └──────────────────────────────────┘
                           │                              F34
                           ▼
        ┌──────────────────────────────────┐
        │      CONVERT ORIGINAL SIGNAL O    │
        │        INTO ABSOLUTE VALUE        │
        └──────────────────────────────────┘
                           │                              F35
                           ▼
        ┌──────────────────────────────────┐
        │     MULTIPLY ORIGINAL SIGNAL O    │
        │      BY FIRST PROPORTIONAL GAIN   │
        └──────────────────────────────────┘
                           │                              F36
                           ▼
        ┌──────────────────────────────────┐
        │     COMPARE ORIGINAL SIGNAL O     │
        │       WITH VIBRATION LEVEL r,     │
        │    AND OUTPUT SIGNAL OF LARGER    │
        │    VALUE AS VIBRATION LEVEL rl    │
        └──────────────────────────────────┘
                           │                              F37
                           ▼
        ┌──────────────────────────────────┐
        │  CALCULATE CUT-OFF FREQUENCY ωc   │
        └──────────────────────────────────┘
                           │                              F38
                           ▼
        ┌──────────────────────────────────┐
        │    SWITCH CUT-OFF FREQUENCY OF    │
        │      VARIABLE LOW-PASS FILTER     │
        └──────────────────────────────────┘
                           │                              F39
                           ▼
        ┌──────────────────────────────────┐
        │      PROCESS VIBRATION LEVEL rl   │
        │     BY VARIABLE LOW-PASS FILTER   │
        └──────────────────────────────────┘
                           │                              F40
                           ▼
        ┌──────────────────────────────────┐
        │      OUTPUT VIBRATION LEVEL rl    │
        └──────────────────────────────────┘
                           │
                           ▼
                    ┌─────────────┐
                    │   RETURN    │
                    └─────────────┘
```

# FIG. 23

# FIG. 24

EP 3 192 681 A1

## FIG. 25

## FIG. 26

SIGNAL

O    P    Q1    r

δ

δ

0    t1    t0    t2    TIME

## FIG. 27

START

READ VIBRATION LEVEL — F41

GENERATE SMOOTHING SIGNAL P
FROM DEVIATION ε
BETWEEN SIGNALS O AND r — F42

OUTPUT SMOOTHING SIGNAL P — F43

RETURN

# FIG. 28

```
┌─────────────┐
│    START    │
└─────────────┘
       │
       ▼                              F51
┌────────────────────────────────┐
│      READ VIBRATION LEVEL       │
└────────────────────────────────┘
       │
       ▼                              F52
┌────────────────────────────────┐
│     SELECT LARGEST SIGNAL Ma    │
└────────────────────────────────┘
       │
       ▼                              F53
┌────────────────────────────────┐
│  GENERATE SMOOTHING SIGNAL P    │
│      FROM DEVIATION ε           │
│   BETWEEN SIGNALS O AND r       │
└────────────────────────────────┘
       │
       ▼                              F54
┌────────────────────────────────┐
│      GENERATE SMOOTHING         │
│    DETERMINATION SIGNAL Z       │
└────────────────────────────────┘
       │
       ▼                              F55
┌────────────────────────────────┐
│    SELECT SMOOTHING SIGNAL P    │
│      OR LARGEST SIGNAL Ma       │
│     AS VIBRATION LEVEL rl       │
└────────────────────────────────┘
       │
       ▼                              F56
┌────────────────────────────────┐
│     OUTPUT VIBRATION LEVEL rl   │
└────────────────────────────────┘
       │
       ▼
┌─────────────┐
│   RETURN    │
└─────────────┘
```

## FIG. 29

272

O $\longrightarrow$ | SMOOTHING DETERMINATION SIGNAL GENERATION UNIT | $\xrightarrow{Z}$

314

311

r $\longrightarrow$ | SIGNAL GENERATION UNIT | $\xrightarrow{P}$

| SPECIFIC RANGE VARYING UNIT | $\xrightarrow{\delta}$ | | $\delta$

312                                313

# FIG. 30

## FIG. 31

EP 3 192 681 A1

# FIG. 32

# FIG. 33

# FIG. 34

# FIG. 35

## FIG. 36

EP 3 192 681 A1

# FIG. 37

# FIG. 38

```
                    ┌─────────────┐
                    │    START    │
                    └─────────────┘
                           │
                           ▼                      F61
        ┌──────────────────────────────────┐
        │      DETECT SPRUNG SPEED OF       │
        │          SPRUNG MEMBER            │
        └──────────────────────────────────┘
                           │                      F62
                           ▼
        ┌──────────────────────────────────┐
        │      DETECT VIBRATION LEVEL r     │
        └──────────────────────────────────┘
                           │                      F63
                           ▼
        ┌──────────────────────────────────┐
        │     PROCESS VIBRATION LEVEL r     │
        │         BY LOW-PASS FILTER        │
        └──────────────────────────────────┘
                           │                      F64
                           ▼
        ┌──────────────────────────────────┐
        │     MULTIPLY VIBRATION LEVEL r    │
        │    BY SECOND PROPORTIONAL GAIN    │
        └──────────────────────────────────┘
                           │                      F65
                           ▼
        ┌──────────────────────────────────┐
        │      CONVERT ORIGINAL SIGNAL O    │
        │         INTO ABSOLUTE VALUE       │
        └──────────────────────────────────┘
                           │                      F66
                           ▼
        ┌──────────────────────────────────┐
        │      MULTIPLY ORIGINAL SIGNAL O   │
        │     BY FIRST PROPORTIONAL GAIN    │
        └──────────────────────────────────┘
                           │                      F67
                           ▼
        ┌──────────────────────────────────┐
        │     COMPARE ORIGINAL SIGNAL O     │
        │       WITH VIBRATION LEVEL r,     │
        │    AND OUTPUT SIGNAL OF LARGER    │
        │     VALUE AS VIBRATION LEVEL rl   │
        └──────────────────────────────────┘
                           │                      F68
                           ▼
        ┌──────────────────────────────────┐
        │     MULTIPLY VIBRATION LEVEL rl   │
        │     BY THIRD PROPORTIONAL GAIN    │
        └──────────────────────────────────┘
                           │                      F69
                           ▼
        ┌──────────────────────────────────┐
        │   CALCULATE CUT-OFF FREQUENCY ωc  │
        └──────────────────────────────────┘
                           │                      F70
                           ▼
        ┌──────────────────────────────────┐
        │    SWITCH CUT-OFF FREQUENCY OF    │
        │       VARIABLE LOW-PASS FILTER    │
        └──────────────────────────────────┘
                           │                      F71
                           ▼
        ┌──────────────────────────────────┐
        │     PROCESS VIBRATION LEVEL rl    │
        │     BY VARIABLE LOW-PASS FILTER   │
        └──────────────────────────────────┘
                           │                      F72
                           ▼
        ┌──────────────────────────────────┐
        │      OUTPUT VIBRATION LEVEL rl    │
        └──────────────────────────────────┘
                           │
                           ▼
                    ┌─────────────┐
                    │   RETURN    │
                    └─────────────┘
```

## INTERNATIONAL SEARCH REPORT

International application No.

PCT/JP2015/074612

### A. CLASSIFICATION OF SUBJECT MATTER

*B60G17/018*(2006.01)i

According to International Patent Classification (IPC) or to both national classification and IPC

### B. FIELDS SEARCHED

Minimum documentation searched (classification system followed by classification symbols)
B60G17/018

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2013-169940 A  (Kayaba Industry Co., Ltd.),<br>02 September 2013 (02.09.2013),<br>claims 1 to 2, 8; paragraphs [0018], [0028] to [0029]; fig. 5 to 6<br>(Family: none) | 1-5,13-15<br>6-12 |
| Y | JP 2012-66695 A  (Toyota Motor Corp.),<br>05 April 2012 (05.04.2012),<br>paragraphs [0053], [0078], [0085], [0095]; fig. 3<br>(Family: none) | 1-5,13-15 |

☒ Further documents are listed in the continuation of Box C. ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 September 2015 (30.09.15) | 27 October 2015 (27.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.

PCT/JP2015/074612

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-224130 A (Nissan Motor Co., Ltd.), 31 October 2013 (31.10.2013), paragraphs [0060] to [0062]; fig. 14 to 15 & US 2015/0046035 A1 paragraphs [0112] to [0114]; fig. 14 to 15 & WO 2013/140657 A1 & EP 2829424 A1 & CN 104203609 A | 12 |
| A | JP 2011-225040 A (Nissan Motor Co., Ltd.), 10 November 2011 (10.11.2011), paragraphs [0015], [0018]; fig. 7 (Family: none) | 1-15 |
| A | JP 8-127214 A (Nissan Motor Co., Ltd.), 21 May 1996 (21.05.1996), paragraphs [0024], [0090], [0094] & US 5740039 A column 13, line 65 to column 14, line 3 | 1-15 |
| A | JP 7-300008 A (Toyota Motor Corp.), 14 November 1995 (14.11.1995), paragraph [0118] (Family: none) | 1-15 |

Form PCT/ISA/210 (continuation of second sheet) (July 2009)

**REFERENCES CITED IN THE DESCRIPTION**

**Patent documents cited in the description**

- JP 2011225040 A
- JP 2014182045 A